(19) Europäisches Patentamt
European Patent Office
Office européen des brevets

(11) Publication number: **0 160 856**
**B1**

(12) **EUROPEAN PATENT SPECIFICATION**

(45) Date of publication of patent specification: **11.07.90**

(51) Int. Cl.$^5$: **C 09 K 11/02,** H 01 J 61/44

(21) Application number: **85104456.0**

(22) Date of filing: **12.04.85**

# (54) Method for coating phosphor particles, phosphor particle, fluorescent lamp, and manufacturing method.

(30) Priority: **07.05.84 US 607865**
**07.05.84 US 607846**
**03.04.85 US 718095**
**03.04.85 US 718096**

(43) Date of publication of application:
**13.11.85 Bulletin 85/46**

(45) Publication of the grant of the patent:
**11.07.90 Bulletin 90/28**

(84) Designated Contracting States:
**DE FR GB NL SE**

(56) References cited:
**DE-A-3 032 225**

**CHEMICAL ABSTRACTS, vol. 91, no. 26, December 1979, page 681, abstract no. 221327t, Columbus, Ohio, US; & JP - A - 79 106 085 (NIPPON ELECTRODE CO., LTD.) 20-08-1979**

(73) Proprietor: **GTE Laboratories Incorporated**
**100 W. 10th Street**
**Wilmington Delaware (US)**

(72) Inventor: **Sigai, Gary A.**
**8 Fifer Lane**
**Lexington Massachusetts 02173 (US)**

(74) Representative: **Patentanwälte Grünecker, Kinkeldey, Stockmair & Partner**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 160 856 B1

## Description

Phosphors are used in mercury discharge lamps and viewing screens of various electronic devices. It has been recognized that various improvements in the performance of phosphors can be obtained if the phosphor material is coated with a protective film or pigment. Numerous attempts have been made to coat the outer surface of individual phosphor particles with a protective coating. However, previous coating methods have failed to produce a particle having a continuous protective coating having a desired substantially uniform thickness on the outer surface of the particle.

The improved performance of phosphor particles having a continuous protective coating can be particularly useful in improving the performance of fluorescent lamps.

DE—A—3032225 discloses a coating method wherein phosphor particles are suspended and heated in an inert gas stream and thereafter reacted with the precursor of the coating substance.

It is the object of the present invention to provide an improved method of forming a protective coating on particles and a method for improving lumen maintainance of fluorescent lamps.

Said object is achieved by claims 1 to 46.

According to this invention, there is provided a method for applying a continuous protective coating to individual phosphor particles which comprises depositing a continuous protective coating on individual phosphor particles by gas-phase chemical vapor deposition while said individual phosphor particles are suspended in a fluidized bed. The fluidized particles are exposed to a vaporized precursor material at a first temperature, the first temperature being less than the temperature at which the precursor material decomposes. After the particles have been enveloped by the precursor material, the precursor material is reacted to form a continuous protective coating on the surface of the individual particles at a second temperature, the second temperature being greater than or equal to the temperature at which the precursor material reacts to form the protective coating material.

In another aspect of the present invention, there is provided a phosphor particle having a continuous protective coating surrounding the outer surface of the particle.

In accordance with still another aspect of the present invention, there is provided a method for improving lumen maintenance of fluorescent lamps comprising the steps of depositing a continuous noncrystalline aluminum oxide coating on individual particles of a finely-divided fluorescent lamp phosphor powder to form individually and continuously coated phosphor particles, applying one or more layers of phosphor to a fluorescent lamp envelope to form a phosphor coated envelope, at least one of the phosphor layers having a phosphor component comprising individually and continuously coated phosphor particles; and processing the phosphor coated envelope into a finished fluorescent lamp.

In accordance with yet another aspect of the present invention there is provided a fluorescent lamp comprising a glass envelope wherein the inner wall of the glass envelope is coated with one or more layers of phosphor, at least one of the phosphor layers having a phosphor component comprising individual particles of a finely-divided fluorescent lamp phosphor which have been individually coated with a continuous, noncrystalline aluminum oxide coating.

In the drawing:

Figure 1 is a schematic representation of an apparatus suitable for use in the method of the present invention.

Figure 2 is a diagrammatic elevational view of a lamp.

For a better understanding of the present invention reference is made to the following disclosure and appended claims in connection with the above described drawing.

The method of the present invention involves the formation of a continuous protective coating on phosphor particles by gas-phase chemical vapor deposition while the phosphor particles are suspended within a fluidized bed. The fluidized particles are exposed to the vaporized precursor material at a first temperature, the first temperature being less than the temperature at which the precursor material decomposes. After the particles have been enveloped by the precursor material, the precursor material is reacted to form a continuous protective coating on the surface of the individual particles at a second temperature, the second temperature being greater than or equal to the temperature at which the precursor material reacts to form the protective coating material.

The fluidized bed is formed by passing an inert gas through the phosphor particles in order to suspend the particles in the inert gas stream. Examples of inert gases suitable for use in this method include nitrogen, argon, helium, neon, or mixtures thereof. In addition to supporting the phosphor particles in a fluidized bed, the inert gas functions as a carrier gas. A volatilizable coating precursor material is vaporized into the inert gas before the inert gas enters the reaction chamber in which the phosphor particles become suspended. Preferably the carrier gas is saturated with the vapor of the coating precursor material. As the carrier gas containing the varporized coating precursor material passes upwardly through the phosphor particles to suspend the particles in a fluidized bed, the particles are enveloped by the vapor of the coating precursor material which is contained in the carrier gas.

In the present method, the fluidized particles are exposed to the vaporized coating precursor material at a first temperature to envelop the particles with coating precursor material, the first temperature being less than the temperature at which the coating precursor material decomposes; and then reacting the coating precursor material enveloping the fluidized particles at a second temperature to form a continuous

protective coating of predetermined thickness on the surface of individual phosphor particles, the second temperature being greater than or equal to the temperature at which the coating precursor material reacts to form the protective coating.

The fluidized bed is preferably maintained in a temperature gradient ranging from a lowest temperature to a highest temperature. The lowest temperature should be less than the temperature at which the coating precursor material will decompose, while the highest temperature should be equal to or greater than the temperature at which the coating precursor material reacts to form the desired coating material.

An oxidizing gas, if necessary, is introduced into the fluidized bed separately from the carrier gas containing the vaporized coating precursor material. Examples of suitable oxidizing gases are air or oxygen. The oxidizing gas may be mixed with a diluent inert gas.

The thickness of the coating is dependent upon the amount of time the process is run, the temperature of the evaporation source, the flow rate through the evaporation source, and the surface area of the phosphor.

Examples of phosphor coating materials that can be applied by the present method include metal or non-metal oxides. Preferred coating materials are the refractory oxides, such as aluminum oxide or yttrium oxide. For a chemical compound or chemical composition to be suitable for use as coating precursor material in the method of the present invention, the compound or composition must be volatilizable. Organo and alkoxide compounds of the metal or nonmetal of the desired oxide coating material which are volatilizable under the conditions of the method may be used as coating precursor materials in the present invention. Acetylacetonates of the metal of the desired oxide coating material can also be used as precursor materials in the present method.

For example, some suitable aluminum oxide precursor materials are represented by the general formula

$$R_X(OR')_{3-x}Al$$

wherein $0 \leq x \leq 3$ and x is an integer, and R and R′ are lower alkyl groups, such as $-CH_3$; $-C_2H_5$; $-C_3H_7$; or $-C_4H_9$. Examples of suitable yttrium oxide precursor materials are represented by the general formula

$$R_x(OR')_{3-x}Y,$$

wherein $0 \leq x \leq 3$ and x is an integer, and R and R′ are lower alkyl groups, such as $-CH_3$; $-C_2H_5$; $-C_3H_7$; $-C_4H_9$; or $-C_5H_{11}$.

Any alkyl, alkoxy, or acetylacetonate compounds of aluminum or yttrium which can be vaporized into the inert carrier gas under the conditions of the method may be used as coating precursor material for aluminum oxide coatings or yttrium oxide coatings, respectively.

When an oxygen-containing coating precursor material, such as an alkoxide or acetylacetonate, is used in the method of the present invention, the use of an oxidizing gas is optional.

In order to implement the fluidized bed—chemical vapor deposition coating method of the present invention, the phosphor powder particles must be capable of being fluidized. Phosphor powders having an average particle size range of about 20 to 80 µm and larger can be fluidized with little or no difficulty. Difficulty is encountered, however, in attempting to fluidize fine phosphor powders, i.e., phosphor powders with particles having an average particle size of less than about 20 µm. The difficulty in fluidizing the particles of fine phosphor powder arises from interparticle adhesive forces which cause agglomeration and bridging between the agglomerates. Such agglomeration and bridging of agglomerates normally results in the formation of channels through the bed thereby causing the gas to pass through the channels without fluidizing the particles. Under these circumstances, there is little or no powder bed expansion.

Particles of fine phosphor powders, such as cool-white halophosphate phosphors which fall within class "C" of the Geldart Classification Scale, can be fluidized and coated by the method of the present invention. To fluidize particles of a fine phosphor powder in the method of the present invention, a small amount, up to about 1 weight percent with respect to the phosphor, of a fluidizing aid should be mixed with the phosphor powder to form a uniform mixture. Preferably, an amount of fluidizing aid less than or equal to about 0.05 weight percent with respect to the phosphor is employed. Suitable fluidizing aids include small particle aluminum oxide, e.g., Aluminum Oxide C, or small particle silica. Fluidization of fine phosphor powders can alternatively be accomplished by additional agitation of the phosphor powder particles which are suspended in the stream of carrier gas. This additional agitation can be accomplished by various agitating means, such as a mechanical stirrer, and preferably a high speed vibromixer. In a preferred embodiment of the present invention, both the fluidizing aid and the additional agitation are used together in order to fluidize the phosphor powder and improve the expansion of the fluidized bed. A schematic representation of a fluidized bed reactor suitable for use in the method of the present invention is shown in Figure 1.

In Figure 1, a feeder line 11 carries the inert carrier gas into a stainless steel bubbler 12 which contains volatilizable coating precursor material, usually in the liquid state. In the bubbler 12, the coating precursor material is vaporized into the carrier gas. The carrier gas containing the precursor can be diluted to provide

appropriate concentration of reactants. The carrier gas containing the vaporized coating precursor material is carried through a connector line 13 into the base of a quartz glass reaction tube 15. The carrier gas containing the coating precursor material passes through a quartz frit 14 within the tube 15 which is used to support the phosphor particle bed 16. Also within the tube 15 is a vibrating mixer 17. Circumferentially located on the shaft of the vibrating mixer 17 and near the vibrating disc 19 is a series of holes 18 through which the oxidizing gas with or without an inert diluent gas enters the reaction tube 15. The quartz glass reaction tube 15 is surrounded by a furnace 20.

The feeder line 11 which carries the inert gas into the bubbler 12 and the bubbler 12 which contains the volatilizable coating precursor material in liquid state are both heated to a temperature which facilitates vaporization of the precursor material into the inert carrier gas. The carrier line 13, which carries the vapor-containing gas stream to the quartz glass reaction tube 15, is heated to a higher temperature than that of line 11 and the bubbler 12 to maintain the precursor material in the vapor state as it is carried to the reaction tube 15 from the bubbler 12.

An important feature of the preferred embodiment of the present invention is the maintenance of the fluidized bed in a temperature gradient. The frit area of the reaction tube is heated to and maintained at a temperature which is less than the temperature at which the coating precursor material decomposes. This area of the reaction tube, which is located at the bottom of the fluidized bed, has the lowest temperature of the temperature gradient in which the fluidized bed is maintained.

By introducing the precursor material into the fluidized bed via a stream of inert carrier gas and by maintaining the frit area at a temperature less than the decomposition temperature of the precursor material (which is also less than the highest temperature of the temperature gradient), the outer surface of each phosphor particle in the fluidized bed is enveloped by vapor of the coating precursor material. Introducing the coating precursor material into the reaction tube via an inert carrier gas eliminates the problem of premature reaction of the precursor material to the desired coating material or to an undesired by-product. Premature reaction results in formation of the actual coating material or by-product in the carrier line 13 from the bubbler 12 to the reaction tube 15, below the frit, or in the porous openings of the frit 14 itself. Premature reaction can further result in blockage of the frit and interruption of the coating process. The problem of decomposition of the precursor material in the frit area is further avoided by maintaining the frit area at a temperature below the temperature at which the precursor material thermally decomposes. Decomposition of the precursor materials which do not contain oxygen, e.g., the alkyl compounds, results in body color being imparted to the coated phosphor and/or incorporation of carbon contaminants into the phosphor coating, which contaminants absorb exciting and/or emitting radiation of the phosphor.

In the method of this invention, the oxidizing gas, when necessary, is introduced into the fluidized bed separately from the carrier gas. The oxidizing gas may or may not be diluted with an inert gas. Preferably, the oxidizing gas is introduced into the fluidized bed at a temperature which is less than the highest temperature, but greater than the lowest temperature. Most preferably, the oxidizing gas is introduced into the fluidized bed at a point in the temperature gradient where the temperature is less than the temperature at which the coating precursor material will undergo a chemical change in the presence of an oxidizing gas. This minimizes contamination of the coating material with carbon and other carbon containing compounds.

The highest temperature of the temperature gradient must be sufficiently high for the coating precursor material surrounding the outer surface of the phosphor particles to react to form the desired coating material. By reacting the precursor material after the vapor of the precursor material has enveloped the phosphor particle surface, the coating is continuous, i.e., the coating does not consist of individual particles of a very fine powder but, rather, shows a high degree of conformal coating, replicating submicrometer features found naturally occurring on the phosphor grain substrates. The coating is noncrystalline.

The following is exemplary of preparations of coated phosphor powder particles according to the methods of the preferred embodiments of the present invention and is not to be construed as necessarily limiting thereof.

Example I

In this example, particles of cool white alkaline earth halophosphate phosphor powder were coated with aluminum oxide by the method of the present invention, using the apparatus illustrated by Figure 1. A fluidized bed 4.0 cm (1-5/8 inch) I.D. was used for the method. 200 g of calcium halophosphate phosphor powder (Cool White No. 4459, obtained from the Chemical and Metallurgical Division of GTE Products Corporation, Towanda, Pennsylvania) and 0.1 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube 15 to form the phosphor bed. Liquid trimethyl aluminum was used in the stainless steel bubbler 12 as the coating precursor material. The carrier gas was bubbled into the trimethyl aluminum liquid to form carrier gas containing vaporized trimethyl aluminum. The carrier gas containing vaporized trimethyl aluminum was diluted with inert gas and then was transported via carrier line 13 to the quartz glass reaction tube 15.

Oxygen gas diluted with nitrogen was transported into the fluidized bed through holes 18 circumferentially located on the shaft of the vibrating mixer 17 above the vibrating disc 19. The vibrating mixer was operated at a speed at 60 cycles/min. Introducing the oxygen into the fluidized bed through an opening or openings located above the vibrating disc, which disc is sufficiently removed from the frit area to avoid the caking of solid material on the frit, eliminated reaction bf the precursor material in the frit openings and prevented blockage of the frit openings.

The nitrogen gas line 11 leading into the bubbler 12 and the bubbler 12 were both heated to and maintained at a temperature of 30°C. Line 13 leading out of the bubbler 12 and into the bottom of the quartz glass reaction tube 15 was heated to and maintained at a temperature of about 45°C.

The furnace 20 was a resistance heated 3 zone furnace. The frit area was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 650°C, although any temperature of 450°C or above can be used.

A nitrogen flow of about 100 ml/min was passed into the bubbler 12, and the nitrogen gas containing vaporized trimethyl aluminum (transporting about 700 mg/h) passed through line 13 and into the reaction tube 15 at a flow rate of about 450 ml/min. The stream of oxygen gas diluted with nitrogen gas was passed into the reaction tube through a second carrier line 21 at a flow rate of about 450 ml/min. The concentration ratio of oxygen to alkyl was observed to affect the body color of the coated particle formed by the present method. A concentration ratio of $O_2$ to trimethyl aluminum of about 200 to 1 was maintained during this reaction to obtain a white body color. (A ratio of less than about 200 to 1 can result in poor, or non-white, body color).

The process was continued for 6 h and an aluminum oxide coating having a thickness of about 15 nm (150 Å) was formed on the phosphor particles.

The aluminum oxide coated particles of the alkaline earth halophosphate were removed from the reaction tube.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example is demonstrated by the replication of the submicron features of the phosphor substrate. The submicron features of the coated particle, however, are visibly less pronounced when compared to the submicron features of an uncoated particle. The coating was additionally shown to be noncrystalline by reflection electron diffraction techniques.

Auger analysis of the coated particle surface revealed that complete surface coverage, within the limits of analysis (99.8%), by aluminum oxide has been achieved based on the attenuation of the calcium peak-to-peak height of the alkaline earth halophosphate phosphor using the formula:

$$\% \text{ coverage} = [1 - (\frac{I_{Ca,\ coated}}{I_{Ca,\ uncoated}})] \times 100$$

Example II

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via a carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 100 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube

through the second carrier line. The flow rate of the oxygen was 495 ml/min and that of the nitrogen diluent was about 500 ml/min. A concentration ratio of $O_2$ to trimethyl aluminum of about 200 to 1 was maintained during this reaction to obtain a white body color.

The process was continued for 6 h and an aluminum oxide coating having a thickness of about 10 nm (100 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

Example III

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen was diluted with nitrogen was transported into the fluidized bed through the holes located on the shaft of the vibrating mixer. The vibrating mixer was operated at a speed of 60 cycles/minute.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 4 h and an aluminum oxide coating having a thickness of about 10 nm (100 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicron features of the phosphor substrate. The submicrometer features of the coated particle, however, are visibly less pronounced when compared to the submicrometer features of an uncoated particle.

Example IV

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was opeated at a speed of 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 100 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 9 h and an aluminum oxide coating having a thickness of about 15 nm (150 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

## Example V

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Porducts Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube through the second carrier line. The flow rate of oxygen was about 495 ml/min and that of the nitrogen diluent wsa about 50 ml/min. A concentration ratio of $O_2$ to trimethyl aluminum of about 200 to 1 was maintained during this reaction to obtain a white body color.

The process was continued for 9 h and an aluminum oxide coating having a thickness of about 15 nm (150 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

## Example VI

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the

trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing as inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 8 h and an aluminum oxide coating having a thickness of about 20 nm (200 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

Example VII

In this example, particles of cool white alkaline earth halophosphate phosphor powder were coated with aluminum oxide by the method of the present invention, using the apparatus described in Example I. 300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen was diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 12 h and an aluminum oxide coating having a thickness of about 30 nm (300 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

Example VIII

In this example, particles of cool white alkaline earth halophosphate phosphor powder were coated with aluminum oxide by the method of the present invention, using the apparatus described in Example I.

300 g of calcium halophosphate phosphor powder (Cool White No. 4459, obtained from the Chemical and Metallurgical Division of GTE Products Corporation, Towanda, Pennsylvania) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperautre of about 550°C.

A nitrogen flow of about 200 ml/min was passed into the bubbler, and the nitrogen gas containing vaporized trimethyl aluminum was transported by nitrogen carrier gas into the reaction tube at a flow rate of about 450 ml/min. The stream of oxygen gas diluted with nitrogen gas was passed into the reaction tube through the second carrier line. The flow rate of oxygen was about 496 ml/min and that of the nitrogen diluent was about 50 ml/min. A concentration ratio of $O_2$ to trimethyl aluminum of about 200 to 1 was maintained during this reaction to obtain a white body color.

The process was continued for 12 h and an aluminum oxide coating having a thickness of about 30 nm (300 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

SEM photomicrographs of uncoated cool white phosphor particles, uncoated cool white phosphor particles which had been mechanically mixed with 0.05 weight percent Aluminum Oxide C, and cool white phosphor particles which had been coated with alumina by the method of the present invention to varying coating thicknesses were compared. The photomicrographs revealed that as the coating thickness is increased above 15 nm (150 Å), a preferential growth of the alumina coating is visible on those parts of the phosphor particle to which Aluminum Oxide C particles had adhered during the powder preparation. This effect becomes increasingly more visible as the coating thickness increases. Also the surface texture becomes less clearly pronounced with increasing coating thickness under very high resolution (50,000—100,000×) SEM analysis.

Example IX

In this example, particles of cool white alkaline earth halophosphate phosphor powder were coated with aluminum oxide by the method of the present invention, using the apparatus described in Example I. 200 g of calcium halophosphate phosphor powder (Cool White No. 4459, obtained from the Chemical and Metallurgical Division of GTE Products Corporation, Towanda, Pennsylvania) without a fluidizing aid were added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 100 ml/min was passed into the bubbler, and the nitrogen gas containing vaporized trimethyl aluminum was transported by nitrogen carrier into the reaction tube at a flow rate of about 450 ml/min. The stream of oxygen gas diluted with nitrogen gas was passed into the reaction tube through a second carrier line. The flow rate of oxygen was about 496 ml/min and that of the nitrogen

diluent was about 50 ml/min. A concentration ratio of $O_2$ to trimethyl aluminum of about 200 to 1 was maintained during this reaction.

The process was continued for 6¼ hours and an aluminum oxide coating having a thickness of about 16 nm (160 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

Auger analysis of the coated particle surface revealed that complete surface coverage.

It was observed, however, that phosphor particles coated without the use of the fluidizing aid exhibited an off-white body color and reflected a loss in brightness. The poor body color is attributed to the poor circulation of the precursor material through the bed due to less than maximum bed expansion in the absence of the fluidizing aid.

The coating thicknesses reported in each of the preceding examples is calculated using the following equation:

$$t_{coating/h} = \frac{g\ Al_2O_3/h}{3.97\ g\ Al_2O_3/cm^3 \times \text{Surface area of phosphor} \times \text{total bed loading (g)}}$$

The phosphor particle of the present invention having a continuous protective aluminum oxide coating surrounding its outer surface has improved performance over the uncoated phosphor. This performance improvement is demonstrated in the following Use Examples in which aluminum oxide coated phosphor particles of the present invention are used in fluorescent lamps. Fluorescent lamps typically experience a gradual decrease in light output with increasing hours of use. A variety of factors contribute to the drop-off in light output during lamp operation. These factors include deposits of impurities from the cathode; the formation of various mercury compounds due to the bombardment of the phosphor by atoms and ions of mercury; changes in the phosphor itself; and changes in the glass envelope, particularly where it may be subject to ultraviolet radiation. The ability of such lamps to resist the drop-off in light output is generally termed lumen maintenance which is measured as the ratio of light output at a given life span compared to an initial light output and expressed as a percentage.

While the decrease in light output with time is an occurrence for all fluorescent lamps, it presents a greater problem for high output and very high output lamps than for normally loaded lamps, and for phosphors particularly susceptible to degradation in the hostile environment of the discharge.

Although all of the factors listed above can be present to a greater or lesser degree in acting to reduce light output, it is presently believed that one of the primary causes of the drop-off in light output during operation is the formation of mercury compounds particularly on the surface of the phosphor coating.

These mercury compounds are believed to form an ultraviolet radiation absorbing film which prevents the phosphor from being sufficiently excited by the radiation from the mercury discharge to achieve maximum light output.

Various uses of alumina have been proposed to improve lamp performance. One such use involves employing a layer of alumina on the interior of the bulb wall and applying the phosphor layer thereover. Another use is the application of a thin layer of alumina over the phosphor layer.

While these techniques provide some benefit, it is believed that obtaining further increases in lumen maintenance while applying only one layer of material to the inner surface of the lamp envelope is desirable. By using phosphor particles having continuous aluminum oxide coatings surrounding the outer surface of each particle in a fluorescent lamp, one can obtain significant increases in lumen maintenance while applying only one layer of material to the lamp envelope.

In accordance with the method of the present invention for improving lumen maintenance of fluorescent lamps, a continuous aluminum oxide coating is deposited on individual particles of a finely-divided fluorescent lamp phosphor powder to form individually and continuously coated phosphor particles.

The inner surface of a fluorescent lamp envelope is then coated with one or more layers of phosphor. Each layer of phosphor applied to the envelope contains at least one phosphor component. A phosphor which contains more than one phosphor component is more commonly referred to as a phosphor blend. At least one of the phosphor layers applied to the lamp envelope has a phosphor component comprising individually and continuously coated phosphor particles. The coated envelope is then processed into a finished lamp according to known techniques. In those lamps containing more than one phosphor layer, a layer containing the individually and continuously coated phosphor particles is preferably the last layer of phosphor applied to the lamp envelope, i.e., the layer directly adjacent to arc generating medium within the lamp.

"Continuous", as used to describe the aluminum oxide coating herein, means non-particulate, i.e., the

aluminum oxide coating surrounding each phosphor particle does not consist of individual aluminum oxide particles.

The key features of the aluminum oxide coated phosphor particles of the present invention are: (1) the continuous, or non-particulate, nature of the coating on each particle; (2) the conformal nature of the coating on each particle, replicating submicrometer features found naturally occurring on the uncoated phosphor particles; and (3) that each phosphor particle is individually coated.

These key features of the coated phosphor particle of the present invention are established and/or supported by Scanning Electron Microscopy (SEM), Auger analysis, reflection electron diffraction techniques, and BET measurements.

Scanning electron microscopy of the coated particles shows that the particles are individually coated; that the aluminum oxide coating on the phosphor particles is continuous and does not consist of aluminum oxide particles; and that the coating is conformal, replicating the submicrometer features of the underlying phosphor particle.

Auger analysis indicates that the coating provides substantially complete coverage of the outer surface of the phosphor particle.

Reflection electron diffraction shows the aluminum oxide coating to be continuous and noncrystalline, i.e., amorphous.

BET measurements support the conformal and continuous nature of the aluminum oxide coating to the extent the surface area of the coated phosphor is not appreciably changed when compared to the surface area of the uncoated phosphor. If the coating were particulate in nature, the surface area of the coated phosphor would be significantly increased. BET measurements also support that the phosphor particles are individually coated.

A fluorescent lamp phosphor comprises any material excited to fluorescence by ultraviolet radiation. Examples of such phosphors include alkaline earth halophosphate phosphor and manganese-doped zinc orthosilicate phosphor.

In a preferred embodiment, the continuous aluminum oxide coating is deposited by chemical vapor deposition in a fluidized bed, e.g., an aluminum containing precursor material is deposited on the outer surface of phosphor powder particles while the particles are suspended in an inert gas stream and the aluminum-containing precursor material is reacted to form aluminum oxide. Examples of suitable precursors of the aluminum-containing compounds include alkyl aluminum compounds; aluminum alkoxides; and aluminum acetylacetonates.

In the preferred embodiment, the fluidized bed is formed by passing an inert gas through the phosphor particles in order to suspend the particles in the inert gas stream. Examples of inert gases suitable for use in this method include nitrogen, argon, helium, neon, or mixtures thereof. In addition to supporting the phosphor particles in a fluidized bed, the inert gas functions as a carrier gas. A volatilizable aluminum containing coating precursor material is vaporized into the inert gas before the inert gas enters the reaction chamber in which the phosphor particles become suspended. Preferably the carrier gas is saturated with the vapor of the aluminum containing coating precursor material. As the carrier gas containing the vaporized aluminum containing coating precursor material passes upwardly through the phosphor particles to suspend the particles in a fluidized bed, the particles are enveloped by the vapor of the coating precursor material which is contained in the carrier gas.

Preferably, the fluidized particles are exposed to the vaporized aluminum containing precursor material at a first temperature, the first temperature being less than the temperature at which the precursor material decomposes. After the particles have been enveloped by the precursor material, the precursor material is reacted to form a continuous aluminum oxide coating on the surface of the individual particles at a second temperature, the second temperature being greater than or equal to the temperature at which the precursor material reacts to form aluminum oxide.

The fluidized bed is most preferably maintained in a temperature gradient ranging from a lowest temperature to a highest temperature. The lowest temperature should be less than the temperature at which the coating precursor material will decompose, while the highest temperature should be equal to or greater than the temperature at which the coating precursor material reacts to form the desired aluminum oxide coating material.

An oxidizing gas, if necessary, is introduced into the fluidized bed separately from the carrier gas containing the vaporized coating precursor material. The use of an oxidizing gas is optional when an oxygen-containing precursor material is used. Examples of suitable oxidizing gases are air or oxygen. The oxidizing gas may be mixed with a diluent inert gas.

The thickness of the coating is dependent upon the amount of time the process is run, the temperature of the evaporation source, and the flow rate through the evaporation source, and the surface area of the phosphor.

The process is continued for a sufficient time to form a continuous aluminum oxide coating of predetermined thickness on the outer surface of the individual phosphor particles.

One or more layers of phosphor are applied to the inner surface of a fluorescent lamp envelope. At least one of the phosphor layers applied to the lamp envelope contains a phosphor component comprising the individually and continuously coated phosphor particles. The phosphor coated envelope is then processed into a finished lamp according to known techniques.

As used herein, the term, "fluorescent lamp" refers to any lamp containing a phosphor excited to fluorescence by ultraviolet radiation, regardless of configuration.

Referring now to the drawing of Figure 2 with greater particularity, there is shown in Figure 2 one example of a fluorescent lamp 24 comprising a tubular, hermetically sealed, glass envelope 25. Electrodes 26 and 27 are sealed in the ends of envelope 25. Electrodes 26 and 27 and project from envelope 25. An arc generating and sustaining medium such as one or more inert gases and mercury vapor is included within envelope 25.

A coating of phosphor 30 is applied to the inside surface of envelope 25. The coating 30 includes a layer of phosphor comprising particles of a finely-divided fluorescent lamp phosphor which have been individually coated with a continuous aluminum oxide coating. While the fluorescent lamp phosphor can be any material useful in fluorescent lamps, the invention herein described is particularly efficacious when the phosphor powder is alkaline earth halophosphate phosphor manganese doped zinc orthosilicate phosphor powder.

The following Use Examples are given to enable those skilled in this art to more clearly understand and practice the present invention and to more clearly demonstrate some advantages of the present invention.

The phosphor numbers given in the Use Examples below are the identifying numbers utilized by GTE Products Corporation, Towanda, Pennsylvania, from which company the phosphors were obtained.

Use Example I

Individually and continuously coated phosphor particles prepared in accordance with Example I were applied to a fluorescent lamp envelope, and processed into a finished lamp according to known techniques including the step of slurrying the phosphor in an organic solvent containing 1% by weight Aluminum Oxide C by normal wet sieving.

Use Example II

Uncoated particles of calcium halophosphate (Cool White No. 4459, Lot 795) were admixed with 0.05% by weight Aluminum Oxide C and applied to a fluorescent lamp envelope and processed into a finished lamp according to known techniques, identical to those of Use Example I.

Use Example III

Uncoated particles of calcium halophosphate (Cool White No. 4459, Lot 795) were applied to a fluorescent lamp envelope and processed into a finished lamp according to known techniques, identical to those of Use Example I.

Use Example IV

Particles of calcium halophosphate (Cool White No. 4459, Lot 795) were coated with a continuous aluminum oxide coating as described in Example I. The coated phosphor particles were applied to the lamp envelope in an aqueous suspension containing 1.75% by weight Aluminum Oxide C and processed into a finished lamp by known techniques. There was no milling of the phosphor during the fabrication procedure.

Use Example V

A lamp was prepared in accordance with Use Example IV with inclusion of the additional step of gentle milling.

The phosphor luminance and maintenance data for the standard 4 Foot T-12 (40 W) cool white fluorescent lamps of Use Examples I—V appear in Table I.

TABLE I

| Use Example | Suspension | Phosphor | Phosphor luminance (maintenance) | | | | | | |
|---|---|---|---|---|---|---|---|---|---|
| | | | 0 h | 100 h | 500 h | 1,000 h | 2,000 h | 3,000 h | 5,000 h |
| I | Organic | $Al_2O_3$-Coated Lot 795 | 3216 | 3115 (96.8) | 3082 (95.8) | 3035 (94.4) | 2965 (92.3) | 2935 (91.2) | 2858 (88.9) |
| II | Organic | Admixed 0.05% "ALON C" +Uncoated Lot 795 | 3253 | 3080 (94.7) | 2973 (91.4) | 2901 (89.2) | 2818 (86.6) | 2792 (85.8) | 2699 (82.9) |
| III | Organic | Uncoated Lot 795 | 3253 | 3118 (95.8) | 3031 (93.2) | 2964 (91.1) | 2884 (88.7) | 2854 (88.6) | 2791 (85.8) |
| IV | Water | $Al_2O_3$-Coated Lot 795 | 3189 | 3105 (97.4) | 3044 (95.4) | 2995 (93.9) | 2914 (91.4) | 2839 (89.0) | 2755 (86.4) |
| V | Water | $Al_2O_3$-Coated Lot 795 | 3224 | 3104 (96.3) | 3027 (93.9) | 2965 (92.0) | 2838 (88.0) | 2798 (86.8) | 2696 (83.6) |

As shown in Table I, while the uncoated phosphor has a higher lumen output at 0 h, the maintenance of phosphor particles having continuous aluminum oxide coatings is improved over uncoated phosphor particles.

The effect of the phosphor coating on fluorescent lamp phosphor maintenance was further evaluated in the standard 4 Foot T12 VHO (Very High Output) lamp:

Use Example VI

Uncoated particles of calcium halophosphate (Cool White No. 4459, Lot 501) were applied to the lamp envelope in an aqueous suspension and processed into a finished lamp by known techniques.

Use Example VII

Particles of calcium halophosphate (Cool White No. 4459, Lot 501) were coated with a continuous aluminum oxide coating as described in Example I. The coated phosphor particles were applied to the lamp envelope in an aqueous suspension and processed into a finished lamp by known techniques. There was no milling of the phosphor during the fabrication procedure.

The phosphor luminance and maintenance data for the 4 Foot T-12 VHO cool white fluorescent lamps of Use Examples VI and VII appear in Table II.

TABLE II

| Use Ex. | Solvent | Phosphor | Method | Phosphor luminance (maintenance) | | | | | | | | |
|---|---|---|---|---|---|---|---|---|---|---|---|---|
| | | | | 0 h | 100 h | 300 h | 500 h | 1,000 h | 2,000 h | 3,000 h | 4,000 h | 5,000 h |
| VI | Water | Uncoated | "Milled" | 7704 | 6981 (90.6) | 6763 (87.8) | 6470 (84.0) | 6085 (79.0) | 5479 (71.1) | 4952 (64.3) | 4681 (60.8) | 4368 (56.7) |
| VII | Water | $Al_2O_3$-Coated | Stirred In | 7696 | 6997 (90.9) | 6866 (89.2) | 6621 (86.0) | 6335 (82.3) | 6014 (78.1) | 5464 (71.0) | 5351 (69.5) | 5134 (66.7) |

As can be seen from Tables I and II, while the uncoated phosphor is initially brighter, the light output of the uncoated phosphor decreases more rapidly as a function of time than the coated phosphor of the present invention. The lamps provided with the coated phosphor also exhibit a resistance to degradation of the phosphor during the lehring step of lamp fabrication.

The effect of the thickness of the aluminum oxide particle coating on fluorescent lamp maintenance was evaluated in the standard 4 foot-T12 VHO lamp:

Use Example VIII

In this example, uncoated particles of cool white alkaline earth halophosphate phosphor powder (Cool White No. 4459, Lot 769) were applied to the inner surface of the lamp envelope according to known techniques, including the steps of slurrying the phosphor in an aqueous suspension containing 1.75% by weight Aluminum Oxide C and normal wet sieving.

Use Example IX

In this example, particles of cool white alkaline earth halophosphate phosphor powder were individually coated with a continuous aluminum oxide coating, usikg the apparatus described in Example I. 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via a carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 100 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube through the second carrier line. The flow rate of the oxygen was 495 ml/min and that of the nitrogen diluent was about 50 ml/min. A concentration ratio of $O_2$ to trimethyl aluminum of about 200 to 1 was maintained during this reaction to obtain a white body color.

The process was continued for 6 h and an aluminum oxide coating having a thickness of about 10 nm (100 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in an aqueous suspension containing 1.75% by weight Aluminum Oxide C and normal wet sieving.

Use Example X

In this example, particles of cool white alkaline earth halophosphate phosphor powder were individually coated with a continuous aluminum oxide coating, using the apparatus described in Example I. 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a

temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaciton tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 4 h and an aluminum oxide coating having a thickness of about 10 nm (100 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in an aqueous suspension containing 1.75% by weight Aluminum Oxide C and normal wet sieving.

Use Example XI

In this example, particles of cool white alkaline earth halophosphate phosphor powder were individually coated with a continuous aluminum oxide coating, using the apparatus described in Example I. 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 100 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 9 h and an aluminum oxide coating having a thickness of about 15 nm (150 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in an aqueous suspension containing 1.75% by weight Aluminum Oxide C and normla wet sieving.

Use Example XII

In this example, particles of cool white alkaline earth halophosphate phosphor powder were individually coated with a continuous aluminum oxide coating, using the apparatus described in Example I.

300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed of 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 550 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 9 h and an aluminum oxide coating having a thickness of about 15 nm (150 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in an aqueous suspension containing 1.75% by weight Aluminum Oxide C and normal wet sieving.

Use Example XIII

In this example, particles of cool white alkaline earth halophosphate phosphor powder were individually coated with a continuous aluminum oxide coating, using the apparatus described in Example I. 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through lhe holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 8 h and an aluminum oxide coating having a thickness of about 20 nm (200 Å) was formed on the phosphor particles.

Electron microscopy of the coated phosphor particles of this example indicated a smooth conformal coating of aluminum oxide on the cool white alkaline earth halophosphate phosphor particles. The

continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in an aqueous suspension containing 1.75% by weight Aluminum Oxide C and normal wet sieving.

Use Example XIV

In this example, particles of cool white alkaline earth halophosphate phosphor powder were individually coated with a continuous aluminum oxide coating, using the apparatus described in Example I. 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed of 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported by nitrogen carrier gas into the reaction tube at a flow rate of about 500 ml/min. The stream of oxygen gas diluted with nitrogen gas was passed into the reaction tube through the second carrier line. The flow rate of oxygen was about 495 ml/min and that of the nitrogen diluent was about 50 ml/min. A concentration ratio of $O_2$ to trimethyl aluminum of about 200 to 1 was maintained during this reaction to obtain a white body color.

The process was continued for 12 h and an aluminum oxide coating having a thickness of about 30 nm (300 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques including the steps of slurrying the coated phosphor in an aqueous suspension containing 1.75% by weight Aluminum Oxide C and normal wet sieving.

Use Example XV

In this example, particles of cool white alkaline earth halophosphate phosphor powder were individually coated with a continuous aluminum oxide coating, using the apparatus described in Example I, 300 g of calcium halophosphate phosphor powder (Cool White No. 4459, Lot 769) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the alkaline earth halophosphate powder. The mixture of the halophosphate phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing vaporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a

temperature of about 400°C; and the area above the oxidizing gas inlet area was heated to and maintained at a temperature of about 550°C.

A nitrogen flow of about 200 ml/min was passed into the bubbler, and the nitrogen gas containing vaporized trimethyl aluminum was transported by nitrogen carrier gas into the reaction tube at a flow rate of about 450 ml/min. The stream of oxygen gas diluted with nitrogen gas was passed into the reaction tube through the second carrier line. The flow rate of oxygen was about 496 ml/min and that of the nitrogen diluent was about 50 ml/min. A concentration ratio of $O_2$ to trimethyl aluminum of about 200 to 1 was maintained during this reaction to obtain a white body color.

The process was continued for 12 h and an aluminum oxide coating having a thickness of about 30 nm (300 Å) was formed on the phosphor particles.

Electron microscopy of the coated phosphor particles of this example indicated a smooth conformal coating of aluminum oxide on the cool white alkaline earth halophosphate phosphor particles. The continuous and conformal nature of the coating applied to the phosphor particle in the example was demonstrated by the replication of the submicrometer features of the phosphor substrate. The submicrometer features of the coated particle, however, are visibly less pronounced when compared to the submicrometer features of an uncoated particle.

The coated phosphor particles were applied to the inner surface of the lamp envelope according to known techniques, including the steps of slurrying the coated phosphor in aqueous suspension containing 1.75% by weight Aluminum Oxide C and normal wet sieving.

The phosphor luminance and maintenance data for the standard 4 Foot T-12 VHO cool white fluorescent lamps of Examples Use VIII—XV appear in Table III. While the data show some variation in maintenance improvement within the thickness series, all coating thicknesses studied result in improved fluorescent lamp maintenance.

TABLE III

| Use Ex. | Solvent | Method | $Al_2O_3$ coating thickness nm (angstroms) | Flow rate into bubbles (ml/min) | Phosphor luminance (maintenance) 0 h | 100 h | 500 h | 1,000 h | 2,000 h |
|---|---|---|---|---|---|---|---|---|---|
| VIII | Water | Wet Sieve | 0 (0) | — | 7805<br>— | 6894<br>(88.3) | 6266<br>(80.3) | 5860<br>(75.1) | 5254<br>(67.3) |
| IX | Water | Wet Sieve | 10 (100) | 100 | 7787<br>— | 6858<br>(88.1) | 6376<br>(81.9) | 6118<br>(78.6) | 5669<br>(72.8) |
| X | Water | Wet Sieve | 10 (100) | 150 | 7672<br>— | 6765<br>(88.2) | 6239<br>(81.3) | 5980<br>(77.9) | 5388<br>(70.2) |
| XI | Water | Wet Sieve | 15 (150) | 100 | 7745<br>— | 6969<br>(90.0) | 6508<br>(84.0) | 6282<br>(81.1) | 5786<br>(74.7) |
| XII | Water | Wet Sieve | 15 (150) | 150 | 7707<br>— | 6811<br>(88.4) | 6308<br>(81.8) | 6068<br>(78.7) | 5616<br>(72.9) |
| XIII | Water | Wet Sieve | 20 (200) | 150 | 7620<br>— | 6725<br>(88.2) | 6248<br>(81.9) | 5914<br>(77.6) | 5385<br>(70.6) |
| XIV | Water | Wet Sieve | 30 (300) | 150 | 7552<br>— | 6765<br>(89.6) | 6244<br>(82.7) | 5998<br>(79.4) | 5531<br>(73.2) |
| XV | Water | Wet Sieve | 40 (400) | 200 | 7416<br>— | 6632<br>(89.4) | 6123<br>(82.6) | 5872<br>(79.2) | 5407<br>(72.9) |

The effect of the manner in which the phosphor coating is prepared prior to being applied to the inner surface of the lamp envelope was evaluated in the standard 4 Foot—T12 VHO lamp. The results are set forth in Table IV.

Use Example XVI

Uncoated particles of calcium halophosphate (Cool White No. 4459, Lot 501) were applied to the lamp envelope in an aqueous suspension containing 1.75% by weight Aluminum Oxide C and processed into a finished lamp by known techniques. The phosphor was gently milled during the fabrication procedure.

Use Example XVII

Particles of calcium halophosphate (Cool White No. 4459, Lot 501) were coated with a continuous aluminum oxide coating, having a calculated thickness of 15 nm (150 Å) as described in Example I. The coated phosphor particles were applied to the lamp envelope in an aqueous suspension containing 1.75% by weight Aluminum Oxide C and processed into a finished lamp by known techniques. There was no milling of the phosphor during the fabrication procedure.

Use Example XVIII

A lamp was prepared in accordance with Use Example XVII with the inclusion of the additional step of gentle milling.

Use Example XIX

Particles of calcium halophosphate (Cool White No. 4459, Lot 501) were coated with a continuous aluminum oxide coating having a calculated thickness of 15 nm (150 Å), as described in Example I. The coated phosphor particles were applied to the inner surface of the lamp envelope according to known techniques, including the steps of slurrying the coated phosphor in an aqueous suspension containing 1.75% by weight Aluminum Oxide C and normal wet sieving.

Use Example XX

Particles of calcium halophosphate (Cool White No. 4459, Lot 501) were coated with a continuous aluminum oxide coating having a calculated thickness of 15 nm (150 Å), as described in Example I. The coated phosphor particles were applied to the inner surface of the lamp envelope according to known techniques, including the steps of slurrying the coated phosphor in an organic solvent containing 1% by weight Aluminum Oxide C and normal wet sieving.

The phosphor luminance and maintenance data for the standard 4 Foot T-12 VHO cool white fluorescent lamps of Use Examples XVI—XX appear in Table IV. Although maintenance improvements are seen for all the fabrication methods tested, the greater maintenance improvement for lamps using individually and continuously coated phosphor particles is seen in lamps fabricated using wet-sieving. The data in Table IV and Table I support the theory that milling is detrimental to optimum lamp performance for lamps using individually and continuously $Al_2O_3$-coated phosphor particles.

TABLE IV

| Use Ex. | Phosphor | Method | Phosphor luminance (maintenance) 0 h | 171 h | 500 h | 1,000 h | 1,470 h | 2,000 h | 3,000 h | 4,000 h |
|---|---|---|---|---|---|---|---|---|---|---|
| XVI | Uncoated Lot 501 | Aqueous Suspension Milled | 7603 — | 6900 (90.8) | 6699 (88.1) | 6177 (81.2) | 5443 (71.6) | 5440 (71.6) | 5039 (66.3) | 4760 (62.6) |
| XVII | $Al_2O_3$-Coated Lot 501 | Aqueous Suspension Stirred-in | 7410 — | 6886 (92.9) | 6588 (88.9) | 6228 (84.0) | 5860 (79.1) | 5885 (79.4) | 5620 (75.8) | 5490 (74.1) |
| XVIII | $Al_2O_3$-Coated Lot 501 | Aqueous Suspension Milled | 7451 — | 6735 (90.4) | 6436 (86.4) | 6126 (82.2) | 5727 (76.9) | 5673 (76.1) | 5437 (73.0) | 5252 (70.5) |
| XIX | $Al_2O_3$-Coated Lot 501 | Aqueous Suspension Wet Sieved | 7347 — | 6992 (95.2) | 6753 (91.9) | 6408 (87.2) | 6235 (84.9) | 6060 (82.5) | 5833 (79.4) | 5737 (78.1) |
| XX | $Al_2O_3$-Coated Lot 501 | Organic Suspension Wet Sieved | 7645 — | 6976 (91.2) | 6515 (85.2) | 6257 (81.8) | 5974 (78.1) | 5892 (77.1) | 5677 (74.3) | 5417 (70.9) |

The effect of aluminum oxide coated phosphor particles on fluorescent lamp phosphor maintenance was further evaluated in the standard 6 Foot T12 HO (High Output) lamp:

Use Example XXI

Uncoated particles of calcium halophosphate (Cool White No. 4459, Lot 501) were applied to a lamp envelope in an aqueous suspension and processed into a finished lamp by known techniques.

Use Example XXII

Particles of calcium halophosphate (Cool White No. 4459, Lot 501) were coated with a continuous aluminum oxide coating, as described in Example I. The coated phosphor particles were applied to a lamp envelope in an aqueous suspension and processed into a finished lamp by known techniques. There was no milling of the phosphor during the fabrication procedure.

The phosphor luminance and maintenance data of the 6 Foot—T12 HO cool white fluorescent lamps of Use Examples XXI and XXII appear in Table V.

TABLE V

| Use Example | Suspension | Phosphor | Method | Phosphor luminance (maintenance) 0 h | 100 h | 500 h | 1,000 h | 2,000 h | 3,000 h |
|---|---|---|---|---|---|---|---|---|---|
| VIII | Water | Uncoated Lot 501 | "Milled" | 7174<br>— | 6829<br>(95.6) | 6592<br>(91.9) | 6410<br>(89.4) | 5820<br>(81.1) | 5676<br>(79.1) |
| IX | Water | $Al_2O_3$-Coated Lot 501 | Stirred-in | 6913<br>— | 7669<br>(97.9) | 6633<br>(95.9) | 6520<br>(94.3) | 6146<br>(88.9) | 6209<br>(89.8) |

Use Example XXIII

In this example, particles of the green-emitting manganese doped zinc orthosilicate phosphor were individually coated with a continuous aluminum oxide coating, using the apparatus described in Example I. The manganese doped zinc orthosilicate, or willemite, phosphor powder was sieved through a 37 µm (400 mesh) screen before being used in the present method to remove large agglomerates of particles. 300 g of the sieved manganese doped zinc orthosilicate phosphor powder (Sylvania Type 2285) and 0.15 g (0.05 weight percent) Aluminum Oxide C, available from Degussa, Inc., the fluidizing aid, were dry blended in a polyethylene jar to obtain a uniform dispersion of the Aluminum Oxide C fluidizing aid throughout the phosphor powder. The mixture of the phosphor powder and fluidizing aid was added to the quartz glass reaction tube to form the phosphor bed. Liquid trimethyl aluminum was used in the stainless steel bubbler as the coating precursor material. The carrier gas was bubbled into the trimethyl aluminum liquid to form carrier gas containing vaporized trimethyl aluminum. The carrier gas containing varporized trimethyl aluminum was transported via the carrier line to the quartz glass reaction tube. Oxygen gas diluted with nitrogen was transported into the fluidized bed through the holes located on the shaft of the vibrating mixer. The vibrating mixer was operated at a speed at 60 cycles/min.

The bubbler and the nitrogen gas line leading into the bubbler were both heated to and maintained at a temperature of 30°C. The line leading out of the bubbler and into the bottom of the quartz glass reaction tube was heated to and maintained at a temperature of about 45°C.

The frit area of the reaction tube was maintained at a temperature of from about 60°C to about 150°C; the oxidizing gas inlet area, located above the vibrating disc, was heated to and maintained at a temperature of about 400°C; and the area above the oxidizing gas inlet area was heated to and maintained at a temperature of about 550°C.

A nitrogen flow of about 150 ml/min was passed into the bubbler, and the nitrogen gas containing vaporized trimethyl aluminum was transported into the reaction tube by nitrogen carrier gas at a flow rate of about 500 ml/min. The stream of oxygen gas diluted with nitrogen gas was passed into the reaction tube through the second carrier line. The flow rate of the oxygen was about 500 ml/min and that of the nitrogen diluent was about 500 ml/min. A concentration ratio of $O_2$ to trimethyl aluminum of about 200 to 1 was maintained during this reaction to obtain a white body color.

The process was continued for 12 h and an aluminum oxide coating having a thickness of about 25 nm (250 Å) was formed on the phosphor particles.

The aluminum oxide coated particles of the willemite were removed from the reaction tube.

Electron microscopy of the coated phosphor particles of this example indicated a smooth conformal coating of aluminum oxide on the willemite phosphor particles. The continuous and conformal nature of the coating applied to the phosphor particle in the example is demonstrated by the replication of the submicrometer features of the phosphor substrate. The submicrometer features of the coated particle, however, are visibly less pronounced when compared to the submicrometer features of an uncoated particle.

Auger analysis of the coated particle surface revealed that complete surface coverage by aluminum oxide had been achieved, based upon the complete attenuation of the zinc, manganese, and silicon in the coated willemite compared to the uncoated willemite phosphor standard.

The individually and continuously coated phosphor particles were then applied to the inner surface of a fluorescent lamp envelope, and processed into a finished 4 Foot—T12 (40 Watt) fluorescent lamp according to known techniques, including the steps of slurrying the phosphor in an organic solvent containing 0.6%

by weight Aluminum Oxide C, and normal wet sieving. There was no milling of the phosphor during the fabrication procedure. No $Sb_2O_3$ was added to the slurry.

Use Example XXIV

Uncoated particles of manganese-doped zinc orthosilicate (Sylvania Type 2285) were applied to the inner surface of a fluorescent lamp envelope and processed into a finished 4 Foot—T12 (40 Watt) fluorescent lamp according to known techniques, including the steps of slurrying the phosphor in an organic containing 0.6% by weight Aluminum Oxide C, and normal wet sieving. There was no milling of the phosphor during the fabrication. No $Sb_2O_3$ was added to the slurry.

Use Example XXV

Uncoated particles of manganese-doped zinc orthosilicate (Sylvania Type 2285) were applied to the inner surface of a fluorescent lamp envelope and processed into a finished 4 Foot—T12 (40 Watt) fluorescent lamp according to known techniques, including the steps of slurrying the phosphor in an organic containing 0.6% by weight Aluminum Oxide C and gentle milling of the phosphor during the fabrication. Antimony (III) oxide ($Sb_2O_3$) was added to the coating suspension. An addition of $Sb_2O_3$ to the coating suspension used in lamp manufacture is known to improve maintenance. Keith H. Butler, *Fluorescent Lamp Phosphors—Technology and Theory*, The Pennsylvania State University Press (University Park, Pa 1980), page 8. The addition of $Sb_2O_3$ is standard in the industry unless otherwise specified.

The phosphor luminance and maintenance data for the 4 Foot—T12 (40 W) manganese-doped zinc orthosilicate fluorescent lamps of Use Examples XXIII through XXV appear in Table VI. An exceptional improvement in lumen maintenance is seen for lamps using individually and continuously $Al_2O_3$—coated particles of manganese-doped zinc orthosilicate phosphor.

The coating thickness reported in each of the preceding Use Examples was calculated using the following equation:

$$t_{coating/h} = \frac{g\ Al_2O_3/h}{3.97\ g\ Al_2O_3/ml \times \text{surface area of phosphor} \times \text{total bed loading}}$$

TABLE VI

| Use Example | Coating suspension | Phosphor | Phosphor luminance (maintenance) | | | |
|---|---|---|---|---|---|---|
| | | | 0 h | 100 h | 500 h | 1,000 h |
| XXIII | Organic Wet Sieved No $Sb_2O_3$ | $Al_2O_3$-Coated $ZnSiO_4$:Mn | 4696 — | 4618 (98.3) | 4558 (97.0) | 4496 (95.7) |
| XXIV | Organic Wet Sieved No $Sb_2O_3$ | Uncoated $ZnSiO_4$:Mn | 4745 — | 4296 (90.5) | 3634 (76.6) | 3181 (67.0) |
| XXV | Organic Wet Sieved $Sb_3O_3$ Added | Uncoated $ZnSiO_4$:Mn | 4393 — | 4093 (93.2) | 3821 (87.0) | 3465 (78.9) |

While there has been shown and described what at present is considered a preferred embodiment of the invention, it will be obvious to those skilled in the art that various changes and modifications may be made therein without departing from the scope of the invention as defined by the appended claims.

**Claims**

1. A method for forming a protective coating on particles comprising:

(a) fluidizing particles of a phosphor powder in a fluidized bed;

(b) exposing the fluidized particles to a vaporized coating precursor at a first temperature to envelop the particles with coating precursor material, said first temperature being less than the temperature at which the coating precursor material decomposes; and

(c) reacting the coating precursor material enveloping the fluidized particles at a second temperature to form a continuous protective coating of predetermined thickness on the surface of individual phosphor particles, said second temperature being greater than or equal to the temperature at which the coating precursor material reacts to form the protective coating.

2. The method of claim 1 wherein the phosphor powder is a fine phosphor powder, said method further comprising:

agitating particles in the fluidized bed with agitating means while said particles are fluidized.

3. The method of claim 1 wherein the phosphor powder comprises a uniform mixture of a fine phosphor powder and up to about 1 weight percent fluidizing aid.

4. The method of claim 2 wherein the protective coating is a refractory oxide.

5. The method of claim 3 wherein the protective coating is a refractory oxide.

6. A method for forming a protective coating on phosphor particles comprising:

(a) vaporizing a volatilizable coating precursor material into an inert carrier gas to form a carrier gas containing vaporized coating precursor material;

(b) passing said carrier gas containing the vaporized coating precursor material through particulate phosphor powder to form a fluidized bed and to envelop particles of the phosphor powder with vapor of the coating precursor material contained in the carrier gas, said fluidized bed being maintained in a temperature gradient ranging from a lowest temperature to a highest temperature, said lowest temperature being less than the temperature at which said coating precursor material decomposed and said highest temperature being equal to or greater than the temperature at which the coating precursor material reacts with an oxidizing gas to form a desired coating material;

(c) passing oxidizing gas into said fluidized bed separately from said carrier gas containing the vaporized coating precursor material and reacting said oxidizing gas with vapor of the coating precursor material on the particles of phosphor powder to form a continuous coating of predetermined thickness on the phosphor particles.

7. The method of claim 6 wherein said inert carrier gas is selected from the group consisting of nitrogen, argon, helium, neon, and mixtures thereof.

8. The method of claim 6 wherein said oxidizing gas is diluted with an inert gas.

9. The method of claim 6 wherein said protective coating material is a refractory oxide.

10. A method for forming a protective coating on phosphor particles comprising:

(a) vaporizing a volatilizable oxygen-containing coating precursor material into an inert carrier gas to form a carrier gas containing vaporized oxygen-containing coating precursor material;

(b) passing said carrier gas containing the vaporized oxygen-containing coating precursor material through particulate phosphor powder to form a fluidized bed and to envelop particles of the phosphor powder with vapor of the oxygen-containing coating precursor material contained in the carrier gas, said fluidized bed being maintained in a temperature gradient ranging from a lowest temperature to a highest temperature, said lowest temperature being less than the temperature at which said oxygen-containing coating precursor material decomposes and said highest temperature being equal to or greater than the temperature at which the oxygen-containing coating precursor material reacts to form a continuous coating of predetermined thickness on the phosphor particles.

11. The method of claim 10 wherein the protective coating material is a refractory oxide.

12. A method for forming a continuous coating on phosphor particles of a fine phosphor powder comprising:

(a) vaporizing a volatilizable coating precursor material into an inert carrier gas to form a carrier gas containing vaporized coating precursor material;

(b) passing said carrier gas containing the vaporized coating precursor material through a mixture of a fine phosphor powder and up to about 1 weight percent of a fluidizing aid to form a fluidized bed in which the particles are suspended in the carrier gas and to envelop the fluidized particles with vapor of the coating precursor material contained in the carrier gas, said fluidized bed being maintained in a temperature gradient ranging from a lowest temperature to a highest temperature, said lowest temperature being less than the temperature at which said coating precursor material decomposes and said highest temperature being equal to or greater than the temperature at which the coating precursor material reacts with an oxidizing gas to form a desired coating material;

(c) passing oxidizing gas into said fluidizing bed separately from said carrier gas containing the vaporized coating precursor material and reacting said oxidizing gas with the vapor of the coating precursor material on the particles of phosphor powder to form a continuous coating of predetermined thickness on the phosphor particle.

13. The method of claim 12 further comprising the step of agitating particles in the fluidized bed while said particles are suspended in the fluidized bed by the carrier gas.

14. The method of claim 13 wherein said fluidizing aid is selected from the group consisting of small particle alumina and small particle silica.

15. The method of claim 13 wherein said inert carrier gas is selected from the group consisting of nitrogen, argon, helium, neon, and mixtures thereof.

16. The method of claim 13 wherein said oxidizing gas is diluted with an inert gas.

17. The method of claim 13 wherein said coating precursor material is a volatilizable organo-metallic compound.

18. The method of claim 13 wherein said coating precursor material is a volatilizable metal-acetylacetonate.

19. The method of claim 13 wherein said coating precursor material is a volatilizable metal alkoxide compound.

20. A method for forming a protective coating on particles of a fine phosphor powder comprising:

(a) vaporizing a volatilizable coating precursor material into an inert carrier gas to form a carrier gas containing vaporized coating precursor material;

(b) passing said carrier gas containing the vaporized coating precursor material through a fine particulate phosphor powder to form a fluidized bed and to envelop particles of the fine phosphor powder with vapor of the coating precursor material contained in the carrier gas, said fluidized bed being maintained in a temperature gradient ranging from a lowest temperature to a highest temperature, said lowest temperature being less than the temperature at which said coating precursor material decomposes and said highest temperature being equal to or greater than the temperature at which the coating precursor material reacts with an oxidizing gas to form a desired coating material;

(c) agitating particles with agitating means in the fluidized bed while said particles are suspended in the fluidized bed by the carrier gas; and

(d) passing oxidizing gas into said fluidized bed separately from said carrier gas containing the vaporized coating precursor material and reacting said oxidizing gas with vapor of the coating precursor material on the particles of the fine phosphor powder to form a continuous coating of predetermined thickness on the phosphor particles.

21. The method of claim 20 wherein the protective coating is a refractory oxide.

22. A method for forming a protective coating on particles of a fine phosphor powder comprising:

(a) vaporizing a volatilizable oxygen-containing coating precursor material into an inert carrier gas to form a carrier gas containing vaporized oxygen-containing coating precursor material;

(b) passing said carrier gas containing the vaporized oxygen-containing coating precursor material through a mixture of a fine particulate phosphor powder and up to about 1 weight percent of a fluidizing aid to form a fluidized bed and to envelop particles of the fine phosphor powder with vapor of the oxygen-containing coating precursor material contained in the carrier gas, said fluidized bed being maintained in a temperature gradient ranging from a lowest temperature to a highest temperature, said lowest temperature being less than the temperature at which said oxygen-containing coating precursor material decomposes and said highest temperature at which the oxygen-containing coating precursor material reacts to form a continuous coating of predetermined thickness on the phosphor particles.

23. The method of claim 22 further comprising the step of agitating particles in the fluidized bed with agitating means while said particles are suspended in the fluidized bed by the carrier gas.

24. The method of claim 22 wherein the protective coating is a refractory oxide.

25. A method of forming a protective coating on particles of a fine phosphor powder comprising:

(a) vaporizing a volatilizable oxygen-containing coating precursor material into an inert carrier gas to form a carrier gas containing vaporized oxygen-containing coating precursor material;

(b) passing said carrier gas containing the vaporized oxygen-containing coating precursor material through a fine particulate phosphor powder to form a fluidized bed and to envelop particles of the fine phosphor powder with vapor of the oxygen-containing coating precursor material contained in the carrier gas, said fluidized bed being maintained in a temperature gradient ranging from a lowest temperature to a highest temperature, said lowest temperature being less than the temperature at which said oxygen-containing coating precursor material decomposes and said highest temperature being equal to or greater than the temperature at which the oxygen-containing coating precursor material reacts to form a continuous coating of predetermined thickness on the phosphor particles; and

(c) agitating particles with agitating means in the fluidized bed while said particles are suspended in the fluidized bed by the carrier gas.

26. The method of claim 25 wherein the protective coating is a refractory oxide.

27. A method for forming a continuous aluminum oxide coating upon particles of a cool white alkaline earth halophosphate phosphor comprising:

(a) vaporizing trimethyl aluminum into an inert carrier gas consisting of nitrogen to form a carrier gas containing vaporized trimethyl aluminum;

(b) passing said carrier gas containing vaporized trimethyl aluminum through a mixture of cool white alkaline earth halophosphate phosphor powder and up to about 1 weight percent small particle alumina to form a fluidized bed in which the particles are suspended in the carrier gas and to envelop particles of the phosphor powder with vapor of the trimethyl aluminum contained in the carrier gas, said fluidized bed being maintained in a temperature gradient ranging from a lowest temperature to a highest temperature, said lowest temperature being from about 60°C to about 150°C and said highest temperature being from about 450°C to about 650°C;

(c) agitating particles of the phosphor while said particles are suspended in the fluidized bed by the carrier gas;

(d) passing oxidizing gas consisting essentially of oxygen into said fluidized bed separately from said carrier gas containing vaporized trimethyl aluminum and reacting said oxygen with the trimethyl aluminum vapor on the calcium halophosphate particles to form a continuous aluminum oxide coating of predetermined thickness on the phosphor particles.

28. The method of claim 27 wherein steps (a) through (d) are continued for a period of time sufficient to

form a continuous aluminum oxide coating having a thickness greater than or equal to about 10 nm (100 Å) on the phosphor particles.

29. A phosphor particle having a continuous, noncrystalline refractory metal oxide coating surrounding the outer surface of the particle.

30. A particle of a finely-divided fluorescent lamp phosphor having a continuous, noncrystalline aluminum oxide coating surrounding the particle.

31. The particle of claim 29 wherein the phosphor is alkaline earth halophosphate phosphor.

32. The particle of claim 29 wherein the phosphor is manganese-doped zinc orthosilicate phosphor.

33. A method for improving lumen maintenance of fluorescent lamps comprising the steps of

(a) depositing an aluminum oxide coating on individual particles of a finely-divided fluorescent lamp phosphor to form individually coated phosphor particles; each phosphor being surrounded by a continuous, noncrystalline aluminum oxide coating;

(b) applying one or more layers of phosphor to a fluorescent lamp envelope to form a phosphor coated envelope, at least one of the phosphor layers having a phosphor component comprising said individually coated phosphor particles; and

(c) processing said phosphor coated envelope into a finished lamp.

34. The method of claim 33 wherein said finely-divided fluorescent lamp phosphor is alkaline earth halophosphate.

35. The method of claim 33 wherein said finely-divided fluorescent lamp phosphor is manganese-doped zinc orthosilicate.

36. The method of claim 33 wherein the continuous aluminum oxide coating is deposited on the individual particles of a finely-divided fluorescent lamp phosphor by chemical vapor deposition while the particles are suspended in a fluidized bed.

37. The method of claim 33 wherein the continuous aluminum oxide coating is deposited on the individual particles of a finely-divided fluorescent lamp phosphor powder by chemical vapor deposition while the particles are suspended in a fluidized bed, the fluidized particles being exposed to a vaporized aluminum-containing precursor material at a first temperature, the first temperature being less than the temperature at which the precursor material decomposes, and the precursor material being reacted to form a continuous aluminum oxide coating on the surface of the individual particles at a second temperature, the second temperature being greater than or equal to the temperature at which the precursor material reacts to form aluminum oxide.

38. The method of claim 33 wherein said continuous aluminum oxide coating is deposited on individual particles of a finely-divided fluorescent lamp phosphor according to any of the methods of claims 1 to 28.

39. A fluorescent lamp comprising a glass envelope having an inner wall wherein the inner wall of the glass envelope is coated with one or more layers of phosphor, at least one of the phosphor layers having a phosphor component comprising individual particles of a finely-divided fluorescent lamp phosphor which have been individually coated with a continuous, noncrystalline aluminum oxide coating.

40. The fluorescent lamp of claim 39 wherein the finely-divided fluorescent lamp phosphor is alkaline earth halophosphate phosphor.

41. The fluorescent lamp of claim 39 wherein the finely-divided fluorescent lamp phosphor is manganese-doped zinc orthosilicate phosphor.

42. The fluorescent lamp of any of claims 39 to 41, wherein the finely-divided fluorescent phosphor has been coated by chemical vapor deposition in a fluidized bed.

43. A fluorescent lamp comprising a glass envelope having an inner wall wherein the inner wall of the glass envelope is coated with a phosphor comprising particles of a finely-divided fluorescent lamp phosphor powder which have been individually coated with a continuous, noncrystalline aluminum oxide coating.

44. The fluorescent lamp of claim 43 wherein the finely-divided fluorescent lamp phosphor is alkaline earth halophosphate phosphor.

45. The fluorescent lamp of claim 43 wherein the finely-divided fluorescent lamp phosphor is manganese-doped zinc orthosilicate phosphor.

46. The fluorescent lamp of any of claims 43 to 45 wherein the finely-divided fluorescent lamp phosphor has been coated by chemical vapor deposition in a fluidized bed.

**Patentansprüche**

1. Verfahren zur Bildung einer Schutzschicht auf Teilchen, umfassend

(a) das Fluidisieren von Teilchen eines Leuchstoffpulvers in einem Fließbett bzw. Wirbelbett;

(b) das Aussetzen der fluidisierten Teilchen einem verdampften Schichtvorläufer bei einer ersten Temperatur, um die Teilchen mit Schichtvorläufermaterial zu umhüllen, wobei die erste Temperatur geringer ist als die Temperatur, bei der sich das Schichtvorläufermaterial zersetzt; und

(c) das Umsetzen des Schichtvorläufermaterials, das die fluidisierten Teilchen umhüllt, bei einer zweiten Temperatur, um eine kontinuierliche Schutzschicht vorbestimmter Dicke auf der Oberfläche der

individuellen Leuchtstoffteilchen zu bilden, wobei die zweite Temperatur größer oder gleich der Temperatur ist, bei der das Schichtvorläufermaterial zur Bildung der Schutzschicht reagiert.

2. Verfahren nach Anspruch 1, worin das Leuchtstoffpulver ein feines Leuchtstoffpulver ist, wobei das Verfahren das Rühren der Teilchen in dem Fließbett mit einer Rühreinrichtung, während die Teilchen fluidisiert werden, umfaßt.

3. Verfahren nach Anspruch 1, worin das Leuchtstoffpulver eine gleichmäßige Mischung eines feinen Leuchtstoffpulvers und bis zu etwa 1 Gew.-% Fluidisierungshilfe umfaßt.

4. Verfahren nach Anspruch 2, worin die Schutzschicht ein feuerfestes Oxid ist.

5. Verfahren nach Anspruch 3, worin die Schutzschicht ein feuerfestes Oxid ist.

6. Verfahren zur Bildung einer Schutzschicht auf Leuchtstoffteilchen, umfassend

(a) das Verdampfen eines verflüchtigbaren Schichtvorläufermaterials in einem inerten Trägergas zur Bildung eines Trägergases, das verdampftes Schichtvorläufermaterial enthält;

(b) das Leiten des Trägergases, das das verdampfte Schichtvorläufermaterial enthält, durch teilchenförmiges Leuchtstoffpulver zur Bildung eines Fließbetts bzw. Wirbelbettes mit Dampf des Schichtvorläufermaterials, das in dem Trägergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das Schichtverläufermaterial zersetzt, und die höchste Temperatur gleich oder größer ist als die Temperatur, bei der das Schichtvorläufermaterial mit einem oxidierenden Gas zur Bildung eines gewünschten Schichtmaterials reagiert;

(c) das Leiten von oxidierendem Gas in das Fließbett, getrennt von dem Trägergas, das das verdampfte Schichtvorläufermaterial enthält, und das Umsetzen des oxidierenden Gases mit Dampf des Schichtvorläufermaterials auf den Teilchen des Leuchtstoffpulvers zur Bildung einer kontinuierlichen Schicht vorbestimmter Dicke auf den Leuchtstoffteilchen.

7. Verfahren nach Anspruch 6, worin das inerte Trägergas aus der Gruppe, bestehend aus Stickstoff, Argon, Helium, Neon und Mischungen daraus, gewählt wird.

8. Verfahren nach Anspruch 6, worin das oxidierende Gas mit einem inerten Gas verdünnt wird.

9. Verfahren nach Anspruch 6, worin das Schutzschichtmaterial ein feuerfestes Oxid ist.

10. Verfahren zur Bildung einer Schutzschicht auf Leuchtstoffteilchen, umfassend

(a) das Verdampfen eines verflüchtigbaren sauerstoffhaltigen Schichtvorläufermaterials in einem inerten Trägergas zur Bildung eines Trägergases, das verdampftes sauerstoffhaltiges Schichtvorläufermaterial enthält;

(b) das Leiten des Trägergases, das das verdampfte, sauerstoffhaltige Schichtvorläufermaterial enthält, durch teilchenförmiges Leuchtstoffpulver zur Bildung eines Fließbettes bzw. Wirbelbettes und zum Umhüllen der Teilchen des Leuchtstoffpulvers mit Dampf des sauerstoffhaltigen Schichtvorläufermaterials, das in dem Triggergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das sauerstoffhaltige Schichtvorläufermaterial zersetzt, und die höchste Temperatur gleich oder größer ist als die Temperatur, bei der das sauerstoffhaltige Schichtvorläufermaterial zur Bildung einer kontinuierlichen Schicht vorbestimmter Dicke auf den Leuchstoffteilchen reagiert.

11. Verfahren nach Anspruch 10, worin das Schutzschichtmaterial ein feuerfestes Oxid ist.

12. Verfahren zur Bildung einer kontinuierlichen Schicht auf Leuchstoffteilchen eines feinen Leuchtstoffpulvers, umfassend

(a) das Verdampfen eines verflüchtigbaren Schichtvorläufermaterials in einem inerten Trägergas zur Bildung eines Trägergases, das verdampftes Schichtvorläufermaterial enthält;

(b) das Leiten des Trägergases, das das verdampfte Schichtvorläufermaterial enthält, durch eine Mischung aus einem feinen Leuchtstoffpulver und bis zu etwa 1 Gew.-% einer Fluidisierungshilfe zur Bildung eines Fließbettes bzw. Wirbelbettes, worin die Teilchen in dem Trägergas suspendiert sind und zum Umhüllen der fluidisierten Teilchen mit Dampf des Schichtvorläufermaterials, das in dem Trägergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das Schichtvorläufermaterial zersetzt, und die höchste Temperatur gleich oder größer ist als die Temperatur, bei der das Schichtvorläufermaterials mit einem oxidierenden Gas zur Bildung eines gewünschten Schichtmaterials reagiert;

(c) das Leiten von oxidierendem Gas in das Fließbett, getrennt von dem Trägergas, das das verdampfte Schichtvorläufermaterial enthält, und das Umsetzen des oxidierenden Gases mit dem Dampf des Schichtvorläufermaterials auf den Teilchen des Leuchtstoffpulvers zur Bildung einer kontinuierlichen Schicht vorbestimmte Dicke auf den Leuchtstoffteilchen.

13. Verfahren nach Anspruch 12, welches weiterhin eine Stufe des Rührens der Teilchen in dem Fließbett, während die Teilchen in dem Fließbett durch das Trägergas suspendiert werden, umfaßt.

14. Verfahren nach Anspruch 13, worin die Fluidisierungshilfe aus der Gruppe, bestehend aus kleinen Teilchen von Aluminiumoxid und kleinen Teilchen von Siliciumoxid, gewählt wird.

15. Verfahren nach Anspruch 13, worin das inerte Trägergas aus der Gruppe, bestehend aus Stickstoff, Argon, Helium, Neon und Mischungen daraus, gewählt wird.

16. Verfahren nach Anspruch 13, worin das oxidierende Gas mit einem inerten Gas verdünnt wird.

17. Verfahren nach Anspruch 13, worin das Schichtvorläufermaterial eine verflüchtigbare organometallische Verbindung ist.

18. Verfahren nach Anspruch 13, worin das Schichtvorläufermaterial ein verflüchtigbares Metallacetylacetonat ist.

19. Verfahren nach Anspruch 13, worin das Schichtvorläufermaterial eine verflüchtigbare Metallalkoxidverbindung ist.

20. Verfahren zur Bildung einer Schutzschicht auf Teilchen eines feinen Leuchtstoffpulvers, umfassend

(a) das Verdampfen eines verflüchtigbaren Schichtvorläufermaterials in einem inerten Trägergas zur Bildung eines Trägergases, das verdampftes Schichtvorläufermaterial enthält;

(b) das Leiten des Trägergases, das das verdampfte Schichtvorläufermaterial enthält, durch ein feines teilchenförmiges Leuchtstoffpulver zur Bildung eines Fließbettes, bzw. Wirbelbettes und zum Umhüllen der Teilchen des feinen Leuchtstoffpulvers mit Dampf des Schichtvorläufermaterials, das in dem Trägergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das Schichtvorläufermaterial zersetzt, und die höchste Temperatur gleich oder größer ist als die Temperatur, bei der das Schichtvorläufermaterial mit einem oxidierenden Gas zur Bildung eines gewünschten Schichtmaterials reagiert;

(c) das Rühren der Teilchen mit einer Rühreinrichtung in dem Fließbett, während die Teilchen in dem Fließbett durch das Trägergas suspendiert werden; und

(d) das Leiten von oxidierendem Gas in das Fließbett, getrennt von dem Trägergas, das das verdampfte Schichtvorläufermaterial enthält, und das Umsetzen des oxidierenden Gases mit Dampf des Schichtvorläufermaterials auf den Teilchen des feinen Leuchtstoffpulvers zur Bildung einer kontinuierlichen Schicht vorbestimmter Dicke auf den Leuchtstoffteilchen.

21. Verfahren nach Anspruch 20, worin die Schutzschicht ein feuerfestes Oxid ist.

22. Verfahren zur Bildung einer Schutzschicht auf Teilchen eines feinen Leuchtstoffpulvers, umfassend

(a) das Verdampfen eines verflüchtigbaren sauerstoffhaltigen Schichtvorläufermaterials in einem inerten Trägergas zur Bildung eines Trägergases, das verdampftes sauerstoffhaltiges Schichtvorläufermaterial enthält;

(b) das Leiten des Trägergases, das das verdampfte, sauerstoffhaltige Schichtvorläufermaterial enthält, durch eine Mischung aus einem feinen, teilchenförmigen Leuchtstoffpulver und bis zu etwa 1 Gew.-% einer Fluidisierungshilfe zur Bildung eines Fließbettes bzw. Wirbelbettes und zum Umhüllen der Teilchen des feinen Leuchtstoffpulvers mit Dampf des sauerstoffhaltigen Schichtvorläufermaterials, das in dem Triggergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das sauerstoffhaltige Schichtvorläufermaterial zersetzt, und die höchste Temperatur gleich oder größer ist als die Temperatur, bei der das sauerstoffhaltige Schichtvorläufermaterial zur Bildung einer kontinuierlichen Schicht vorbestimmter Dicke auf den Leuchtstoffteilchen reagiert.

23. Verfahren nach Anspruch 22, welches weiterhin eine Stufe des Rührens der Teilchen in dem Fließbett mit einer Rühreinrichtung, während die Teilchen in dem Fließbett durch das Trägergas suspendiert werden, umfaßt.

24. Verfahren nach Anspruch 22, worin die Schutzschicht ein feuerfestes Oxid ist.

25. Verfahren zur Bildung einer Schutzschicht auf Teilchen eines feinen Leuchtstoffpulvers, umfassend

(a) das Verdampfen eines verflüchtigbaren sauerstoffhaltigen Schichtvorläufermaterials in einem inerten Trägergas zur Bildung eines Trägergases, das verdampftes, sauerstoffhaltiges Schichtvorläufermaterial enthält;

(b) das Leiten des Trägergases, das das verdampfte, sauerstoffhaltige Schichtvorläufermaterial enthält, durch ein feines, teilchenförmiges Leuchtstoffpulver zur Bildung eines Fließbettes bzw. Wirbelbettes und zum Umhüllen der Teilchen des feinen Leichtstoffpulvers mit Dampf des sauerstoffhaltigen Schichtvorläufermaterials, das in dem Trägergas enthalten ist, wobei das Fließbett in einem Temperaturgradienten, der von einer niedrigsten Temperatur bis zu einer höchsten Temperatur reicht, gehalten wird, wobei die niedrigste Temperatur geringer ist als die Temperatur, bei der sich das sauerstoffhaltige Schichtvorläufermaterial zersetzt, und die höchste Temperatur gleich oder größer ist als die Temperatur, bei der das sauerstoffhaltige Schichtvorläufermaterial zur Bildung einer kontinuierlichen Schicht vorbestimmter Dicke auf den Leuchtstoffteilchen reagiert; und

(c) das Rühren der Teilchen mit einer Rühreinrichtung in dem Fließbett, während die Teilchen in dem Fließbett durch das Trägergas suspendiert werden.

26. Verfahren nach Anspruch 25, worin die Schutzschicht ein feuerfestes Oxid ist.

27. Verfahren zur Bildung einer kontinuierlichen Aluminiumoxidschicht auf Teilchen eines kalten, weißen Erdalkalihalogenphosphatleuchtstoffs, umfassend

(a) das Verdampfen von Trimethylaluminium in einem inerten Trägergas, das aus Stickstoff besteht, zur Bildung eines Trägergases, das verdampftes Trimethylaluminium enthält;

(b) das Leiten des Trägergas, das verdampftes Trimethylaluminium enthält, durch eine Mischung aus einem kalten weißen Erdalkalihalogenphosphatleuchtstoffpulver und bis zu etwa 1 Gew.-% kleinen

Teilchen von Aluminiumoxid zur Bildung eines Fließbettes bzw. Wirbelbettes, worin die Teilchen in dem Triggergas suspendiert sind, und zum Umhüllen der Teilchen des Leuchtstoffpulvers mit Dampf von Trimethylaluminium, das in dem Triggergas enthalten ist, wobei das Fließbett in einem Temperaturgradienten, der von einer niedrigsten Temperatur bis zu einer höchsten Temperatur reicht, gehalten wird, wobei die niedrigste Temperatur etwa 60°C bis etwa 150°C beträgt und die höchste Temperatur etwa 450°C bis etwa 650°C beträgt;

(c) das Rühren der Teilchen des Leuchtstoffs, während die Teilchen in dem Fließbett durch das Trägergas suspendiert werden;

(d) das Leiten von oxidierendem Gas, das im wesentlichen aus Sauerstoff besteht, in das Fließbett, getrennt von dem Trägergas, das verdampftes Trimethylaluminium enthält, und das Umsetzen des Sauerstoffs mit dem Trimethylaluminiumdampf auf den Calciumhalogenphosphatteilchen zur Bildung einer kontinuierlichen Aluminiumoxidschicht vorbestimmter Dicke auf den Leuchtstoffteilchen.

28. Verfharen nach Anspruch 27, worin die Stufen (a) bis (d) über einen Zeitraum, der ausreichend ist zur Bildung einer kontinuierlichen Aluminiumoxidschicht mit einer Dicke von mehr als oder gleich etwa 10 nm (100 Å) auf den Leuchtstoffteilchen, durchgeführt werden.

29. Leuchtstoffteilchen mit einer kontinuierlichen nichtkristallinen, feuerfesten Oxidschicht, die die Außenoberfläche des Teilchens umgibt.

30. Teilchen eines fein zerteilten Fluoreszenzlampenleuchtstoffs mit einer kontinuierlichen, nichtkristallinen Aluminiumoxidschicht, die das Teilchen umgibt.

31. Teilchen nach Anspruch 29, worin der Leuchtstoff ein Erdalkalihalogenphosphatleuchtstoff ist.

32. Teilchen nach Anspruch 29, worin der Leuchtstoff ein mangandotierter Zinkorthosilikatleuchtstoff ist.

33. Verfahren zur Verbesserung der Lumenerhaltung von Fluoreszenzlampen, umfassend.

(a) das Abscheiden einer Aluminiumoxidschicht auf individuellen Teilchen eines feinzerteilten Fluoreszenzlampenleuchtstoffs zur Bildung von individuell beschichteten Leuchtstoffteilchen, wobei jeder Leuchtstoff von einer kontinuierlichen, nichtkristallinen Aluminiumoxidschicht umgeben ist;

(b) das Aufbringen einer oder mehrerer Schichten eines Leuchtstoffs auf ein Fluoreszenzlampenumhüllung zur Bildung einer Leuchtstoffbeschichteten Umhüllung, wobei wenigstens eine der Leuchtstoffschichten eine Leuchtstoffkomponente besitzt, die die individuell beschichteten Leuchtstoffteilchen umfaßt; und

(c) die Bearbeitung der leuchtstoffumhüllten Umhüllung zu einer Endlampe.

34. Verfahren zur nach Anspruch 33, worin der feinzerteilte Fluoreszenzlampenleuchtstoff Erdalkalihalogenphosphat ist.

35. Verfahren nach Anspruch 33, worin der feinzerteilte Fluoreszenzlampenleuchtstoff mangandotiertes Zinkorthosilikat ist.

36. Verfahren nach Anspruch 33, worin die kontinuierliche Aluminiumoxidschicht auf den individuellen Teilchen eines feinzerteilten Fluoreszenzlampenleuchtstoffs durch chemische Dampfabscheidung abgeschieden wird, während die Teilchen in einem Fließbett suspendiert werden.

37. Verfahren nach Anspruch 33, worin die kontinuierliche Aluminiumoxidschicht auf den individuellen Teilchen eines feinzerteilten Fluoreszenzlampenleuchtstoffpulvers durch chemische Dampfabscheidung abgeschieden wird, während die Teilchen in einem Fließbett suspendiert werden, wobei die fluidisierten Teilchen einem verdampften aluminiumhaltigen Vorläufermaterial bei einer ersten Temperatur ausgesetzt werden, wobei die erste Temperatur geringer ist als die Temperatur, bei der sich das Vorläufermaterial zersetzt, und das Vorläufermaterial umgesetzt wird zur Bildung einer kontinuierlichen Aluminiumoxidschicht auf der Oberfläche der individuellen Teilchen bei einer zweiten Temperatur, wobei die zweite Temperatur größer oder gleich ist als die Temperatur, bei der das Vorläufermaterial zur Bildung von Aluminiumoxid reagiert.

38. Verfahren nach Anspruch 33, worin die kontinuierliche Aluminiumoxidschicht auf individuellen Teilchen eines feinzerteilten Fluoreszenzlampenleuchtstoffs gemäß einem der Verfahren der Ansprüche 1 bis 28 abgeschieden wird.

39. Fluoreszenzlampe, umfassend eine Glasumhüllung mit einer inneren Wand, worin die innere Wand der Glasumhüllung mit einer oder mehreren Schichten eines Leuchtstoffs beschichtet ist, und wenigstens eine der Leuchtstoffschichten eine Leuchtstoffkomponente besitzt, die individuelle Teilchen eines feinzerteilten Fluoreszenzlampenleuchtstoffs besitzt, die mit einer kontinuierlichen, nichtkristallinen Aluminiumoxidschicht individuell beschichtet sind.

40. Fluoreszenzlampe nach Anspruch 39, worin der feinzerteilte Fluoreszenzlampenleuchtstoff ein Erdalkalihalogenphosphatleuchtstoff ist.

41. Fluoreszenzlampe nach Anspruch 39, worin der feinzerteilte Fluoreszenzlampenleuchtstoff ein mangandotierter Zinkorthosilikatleuchtstoff ist.

42. Fluoreszenzlampe nach einem der Ansprüche 39 bis 41, worin der feinzerteilte Fluoreszenzleuchstoff durch chemische Dampfabscheidung in einem Fließbett beschichtet worden ist.

43. Fluoreszenzlampe, umfassend eine Glasumhüllung mit einer inneren Wand, worin die innere Wand der Glasumhüllung mit einem Leuchtstoff, umfassend Teilchen eines feinzerteilten Fluoreszenzlampenleuchtstoffpulvers, die individuell mit einer kontinuierlichen nichtkristallinen Aluminiumoxidschicht beschicht worden sind, beschichtet ist.

44. Fluoreszenzlampe nach Anspruch 43, worin der feinzerteilte Fluoreszenzlampenleuchtstoff Erdalkalihalogenphosphatleuchtstoff ist.

45. Fluoreszenzlampe nach Anspruch 43, worin der feinzerteilte Fluoreszenzlampenleuchtstoff mangandotierter Zinkorthosilikatleuchtstoff ist.

46. Fluoreszenzlampe nach einem der Ansprüche 43 bis 45, worin der feinzerteilte Fluoreszenzlampenleuchtstoff durch chemische Dampfabscheidung in einem Fließbett beschichtet worden ist.

**Revendications**

1. Procédé pour former un revêtement protecteur sur des particules de luminophore incluant les étapes suivantes:

(a) fluidification des particules d'une poudre de luminophore dans un lit fluidifié;

(b) exposition des particules fluidifiées à un matériau précurseur de revêtement vaporisé, à une première température, de manière à envelopper les particules avec du matériau précurseur de revêtement; la dite première température étant inférieure à la température de décomposition du matériau précurseur de revêtement; et

(c) déclenchement d'une réaction du matériau précurseur de revêtement enveloppant les particules fluidifiées, à une seconde température, de manière à former un revêtement protecteur continu d'épaisseur prédéterminée sur la surface de chaque particule de luminophore; la dite seconde température étant supérieure ou égale à la température à partir de laquelle le matériau précurseur de revêtement réagit pour former le revêtement protecteur.

2. Procédé selon la revendication 1, caractérisé en ce que la poudre de luminophore est une poudre fine de luminophore, le dit procédé incluant de plus une étape d'agitation des particules dans le lit fluidifié, réalisée au moyen d'instruments d'agitation, pendant que les dites particules sont fluidifiées.

3. Procédé selon la revendication 1, caractérisé en ce que la poudre de luminophore comprend un mélange uniforme d'une poudre fine de luminophore et jusqu'à environ 1% en poids d'un auxiliaire de fluidification.

4. Procédé selon la revendication 2, caractérisé en ce que le revêtement protecteur est un oxyde réfractaire.

5. Procédé selon la revendication 3, caractérisé en ce que le revêtement protecteur est un oxyde réfractaire.

6. Procédé pour former un revêtement protecteur sur des particules de luminophore, comprenant les étapes suivantes:

(a) vaporisation d'un matériau précurseur de revêtement volatilisable à l'intérieur d'un gaz porteur inerte, de manière à former un gaz porteur contenant un matériau précurseur de revêtement vaporisé;

(b) passage dudit gaz porteur contenant le matériau précurseur de revêtement vaporisé, à travers une poudre de luminophore particulaire, de manière à former un lit fluidifié et à envelopper les particules de la poudre de luminophore avec une vapeur du matériau précurseur de revêtement contenue dans le gaz porteur; le dit lit fluidifié étant maintenu dans un gradient de température allant d'une température minimale à une température maximale, la dite température minimale étant inférieure à la température de décomposition du dit matériau précurseur de revêtement, et la dite température maximale étant égale ou supérieure à la température à partir de laquelle le matériau précurseur de revêtement réagit avec un gaz oxydant pour former un matériau de revêtement que l'on veut obtenir;

(c) passage du gaz oxydant dans le dit lit fluidifié, effectué de façon séparée vis à vis du gaz porteur contenant le matériau précurseur de revêtement vaporisé, et déclenchement d'une réaction dudit gaz oxydant avec une vapeur du matériau précurseur de revêtement au contact des particules de poudre de luminophore, de manière à former un revêtement continu, d'épaisseur prédéterminée, sur les particules de luminophore.

7. Procédé selon la revendication 6, caractérisé en ce que le dit gaz porteur inerte est choisi dans le groupe comprenant l'azote, l'argon, l'hélium, le néon et des mélanges de ceux-ci.

8. Procédé selon la revendication 6, caractérisé en ce que le dit gaz oxydant est dilué avec un gaz inerte.

9. Procédé selon la revendication 6, caractérisé en ce que le dit matériau de revêtement protecteur est un oxyde réfractaire.

10. Procédé pour former un revêtement de protection sur les particules de luminophore, comprenant les étapes suivantes:

(a) vaporisation d'un matériau précurseur de revêtement volatilisable contenant de l'oxygène, à l'intérieur d'un gaz porteur inerte, de manière à former un gaz porteur contenant un matériau précurseur de revêtement vaporisé renfermant de l'oxygène;

(b) passage dudit gaz porteur contenant un matériau précurseur de revêtement vaporisé renfermant de l'oxygène, à travers une poudre particulaire de luminophore, de manière à former un lit fluidifié et à envelopper les particules de la poudre de luminophore avec une vapeur du matériau précurseur de revêtement renfermant de l'oxygène, contenue dans le gaz porteur, le dit lit fluidifié étant maintenu dans un gradient de température allant d'une température minimale à une température maximale, la dite température minimale étant inférieure à la température de décomposition du matériau précurseur de

revêtement renfermant de l'oxygène, et la dite température maximale étant égale ou supérieure à la température à partir de laquelle le matériau précurseur de revêtement renfermant de l'oxygène réagit pour former un revêtement continu d'épaisseur prédéterminée sur les particules de luminophore.

11. Procédé selon la revendication 10, caractérisé en ce que le matériau de revêtement protecteur est un oxyde réfractaire.

12. Procédé pour former un revêtement continu sur les particules de luminophore d'une poudre fine de luminophore, comprenant les étapes suivantes:

(a) vaporisation d'un matériau précurseur de revêtement volatilisable à l'intérieur d'un gaz porteur inerte, de manière à former un gaz porteur contenant un matériau précurseur de revêtement vaporisé;

(b) passage dudit gaz porteur contenant du matériau précurseur de revêtement vaporisé, à travers un mélange de poudre fine de luminophore et jusqu'à 1% environ en poids d'un auxiliare de fluidification, de manière à former un lit fluidifié où les particules sont suspendues à l'intérieur du gaz porteur, et à envelopper les particules fluidifiées avec la vapeur du matériau précurseur de revêtement contenu dans le gaz porteur; le dit lit fluidifié étant maintenu dans un gradient de température allant d'une température minimale à une température maximale, la dite température minimale étant inférieure à la température de décomposition du dit matériau précurseur de revêtement, et la dite température maximale étant égale ou supérieure à la température à partir de laquelle le matériau précurseur de revêtement réagit avec un gaz oxydant pour former un matériau de revêtement que l'on veut obtenir;

(c) passage du gaz oxydant dans le dit lit fluidifié, effectué de façon séparée vis-à-vis du gaz porteur contenant le matériau précurseur de revêtement vaporisé, et déclenchement d'une réaction dudit gaz oxydant avec la vapeur du matériau précurseur de revêtement au contact des particules de poudre de luminophore, de manière à former un revêtement continu, d'épaisseur prédéterminée, sur les particules de luminophore.

13. Procédé selon la revendication 12, caractérisé en ce qu'il comprend en outre l'étape qui consiste à agiter les particules dans le lit fluidifié, pendant que les dites particules se trouvent suspendues dans le lit fluidifié par le gaz porteur.

14. Procédé selon la revendication 13, caractérisé en ce que le dit auxiliaire de fluidification est choisi dans le groupe comprenant l'alumine en particules de faibles dimensions et la silice en particules de faibles dimensions.

15. Procédé selon la revendication 13, caractérisé en ce que le gaz porteur inerte est choisi dans le groupe comprenant l'azote, l'argon, l'hélium, le néon et des mélanges de ceux-ci.

16. Procédé selon la revendication 13, caractérisé en ce que le dit gaz oxydant est dilué avec un gaz inerte.

17. Procédé selon la revendication 13, caractérisé en ce que le dit matériau précurseur de revêtement est un composé organométallique volatilisable.

18. Procédé selon la revendication 13, caractérisé en ce que le matériau précurseur volatilisable est un acétylacétonate métallique volatilisable.

19. Procédé selon la revendication 13, caractérisé en ce que le dit matériau précurseur de revêtement est un composé alcooxyde métallique volatilisable.

20. Procédé pour former un revêtement protecteur sur les particules d'une poudre fine de luminophore, comprenant les étapes suivantes:

(a) vaporisation d'un matériau précurseur de revêtement volatilisable à l'intérieur d'un gaz porteur inerte, de manière à former un gaz porteur contenant un matériau précurseur de revêtement volatilisable;

(b) passage dudit gaz porteur contenant le matériau précurseur de revêtement vaporisé à travers une poudre particulaire fine de luminophore, de manière à former un lit fluidifié et à envelopper les particules de la poudre fine de luminophore avec une vapeur du matériau précurseur de revêtement contenue dans le gaz porteur; le dit lit fluidifié étant maintenu dans un gradient de température allant d'une température minimale à une température maximale, la dite température minimale étant inférieure à la température de décomposition du dit matériau précurseur de revêtement, et la dite température maximale étant égale ou supérieure à la température à partir de laquelle le matériau précurseur de revêtement réagit avec un gaz oxydant pour former un matériau de revêtement que l'on veut obtenir;

(c) agitation des particules dans le dit fluidifié, réalisée au moyun d'instruments d'agitation, pendant que les dites particules se trouvent suspendues dans le lit fluidifié par le gaz porteur; et

(d) passage d'un gaz oxydant dans le lit fluidifié, effectué de façon séparée vis à vis du gaz porteur contenant le matériau précurseur de revêtement vaporisé, et déclenchement d'une réaction dudit gaz oxydant avec une vapeur du matériau précurseur de revêtement au contact les particules de poudre fine de luminophore, de manière à former un revêtement continu d'épaisseur prédéterminée sur les particules de luminophore.

21. Procédé selon la revendication 20, caractérisé en ce que le revêtement protecteur est un oxyde réfractaire.

22. Procédé pour former un revêtement protecteur sur les particules d'une poudre fine de luminophore, comprenant les étapes suivantes:

(a) vaporisation d'un matériau précurseur de revêtement volatilisable, renfermant de l'oxygène à l'intérieur d'un gaz porteur inerte, de manière à former un gaz porteur contenant un matériau précurseur de revêtement vaporisé renfermant de l'oxygène;

(b) passage dudit gaz porteur, contenant le matériau précurseur de revêtement vaporisé renfermant de l'oxygène, à travers un mélange de poudre particulaire fine de luminophore et jusqu'à 1% environ en poids d'un auxiliare de fluidification, de manière à former un lit fluidifié et à envelopper les particules de poudre fine de luminophore avec une vapeur du matériau précurseur de revêtement renfermant de l'oxygène, contenu dans le gaz porteur; le dit lit fluidifié étant maintenu dans un gradient de température allant d'une température minimale à une température maximale, la dite température minimale étant inférieure à la température de décomposition du dit matériau précurseur de revêtement renfermant de l'oxygène, et la dite température maximale étant égale ou supérieure à la température à partir de laquelle le matériau précurseur de revêtement renfermant de l'oxygène réagit pour former un revêtement continu d'épaisseur prédéterminée sur les particules de luminophore.

23. Procédé selon la revendication 22, caractérisé en ce qu'il comprend en outre l'étape qui consiste à agiter les particules dans le lit fluidifié au moyen d'instruments d'agitation, pendant que les dites particules se trouvent suspendues dans le lit fluidifié par le gaz porteur.

24. Procédé selon la revendication 22, caractérisé en ce que le revêtement protecteur est un oxyde réfractaire.

25. Procédé pour former un revêtement protecteur sur les particules d'une poudre fine de luminophore, comprenant les étapes suivantes:

(a) vaporisation d'un matériau précurseur de revêtement volatilisable, renfermant de l'oxygène, à l'intérieur d'un gaz porteur inerte, de manière à former un gaz porteur contenant un matériau précurseur de revêtement vaporisé renfermant de l'oxygène;

(b) passage dudit gaz porteur contenant le matériau précurseur de revêtement vaporisé, renfermant de l'oxygène, à travers une poudre particulaire fine de luminophore, de manière à former un lit fluidifié et à envelopper les particules de poudre fine de luminophore avec une vapeur du matériau précurseur de revêtement renfermant de l'oxygène, contenue dans le gaz porteur; le dit lit fluidifié étant maintenu dans un gradient de température allant d'une température minimale à une température maximale, la dite température minimale étant inférieure à la température de décomposition du dit matériau précurseur de revêtement renfermant de l'oxygène, et la dite température maximale étant égale ou supérieure à la température à partir de laquelle le matériau précurseur de revêtement renfermant de l'oxygène réagit pour former un revêtement continu d'épaisseur prédéterminée sur les particules de luminophore; et

(c) agitation des particules dans le lit fluidifié, effectuée au moyen d'instruments d'agitation, pendant que les dites particules se trouvent suspendues dans le lit fluidifié par le gaz porteur.

26. Procédé selon la revendication 25, caractérisé en ce que le revêtement protecteur est un oxyde réfractaire.

27. Procédé pour former un revêtement continu d'alumine sur les particules d'un luminophore d'halophosphate alcalino-terreux de type "blanc froid", comprenant les étapes suivantes:

(a) vaporisation de triméthyl-aluminium à l'intérieur d'un gaz porteur inerte constitué d'azote, de manière à former un gaz porteur contenant du triméthyl-aluminium vaporisé;

(b) passage dudit gaz porteur contenant du triméthyl-aluminium vaporisé à travers un mélange de poudre de luminophore d'halophosphate alcalino-terreux blanc froid, et jusqu'à 1% environ en poids d'alumine en particules de faibles dimensions, en proportion d'environ 1% en poids, de manière à former un lit fluidifié où les particules se trouvent suspendues par le gaz porteur, et à envelopper les particules de poudre de luminophore avec une vapeur de triméthyl-aluminium contenue dans le gaz porteur; le dit lit fluidifié étant maintenu dans un gradient de température allant d'une température minimale à une température maximale, la dite température minimale allant d'environ 60°C à environ 150°C, et la dite température maximale allant d'environ 450°C à environ 650°C;

(c) agitation des particules de luminophore, pendant que les dites particules se trouvent suspendues dans le lit fluidifié par le gaz porteur;

(d) passage du gaz oxydant, constitué essentiellement d'oxygène, vers le lit fluidifié, effectué séparément vis à vis du gaz porteur contenant du triméthyl-aluminium vaporisé, et déclenchement d'une réaction dudit oxygène avec la vapeur de triméthyl-aluminium au contact des particules d'halophosphate de calcium, de manière à former un revêtement continu d'alumine d'épaisseur prédéterminée sur les particules de luminophore.

28. Procédé selon la revendication 27, caractérisé en ce que les étapes (a) à (d) sont poursuivies pendant un temps suffisant pour former un revêtement continu d'alumine d'une épaisseur supérieure ou égale à environ 10 nm (100 Å) sur les particules de luminophore.

29. Particule de luminophore caractérisée en ce qu'elle comporte un revêtement continu et non cristallin d'oxyde métallique réfractaire, entourant la surface externe de la dite particule.

30. Particule de luminophore finement divisé pour lampe fluorescente, caractérisée en ce qu'elle comporte un revêtement continu et non-cristallin d'alumine entourant la dite particule.

31. Particule selon la revendication 29, caractérisée en ce que le luminophore est un halophosphate alcalino-terreux.

32. Particule selon la revendication 29, caractérisé en ce que le luminophore est un orthosilicate de zinc dopé au manganèse.

33. Procédé pour améliorer la maintenance un lumens des lampes fluorescentes, comprenant les étapes suivantes:

(a) dépôt d'un revêtement d'alumine sur chaque particule d'un luminophore finement divisé pour lampe fluorescente, de manière à former des particules de luminophore revêtues individuellement, chaque particule de luminophore étant entourée d'un revêtement continu et non-cristallin d'alumine;

(b) application d'un ou plusieurs couches de luminophore sur une ampoule d'une lampe fluorescente, de manière à former une ampoule enduite de luminophore, au moins l'une des couches de luminophore comportant un composant de luminophore comprenant les dites particules de luminophore revêtues individuellement;

(c) transformation de la dite ampoule enduite de luminophore en lampe achevée.

34. Procédé selon la revendication 33, caractérisé en ce que le luminophore finement divisé pour lampes fluorescentes est un halophosphate alcalino-terreux.

35. Procédé selon la revendication 33, caractérisé en ce que le luminophore finement divisé pour lampe fluorescente est un orthosilicate de zinc dopé au manganèse.

36. Procédé selon la revendication 33, caractérisé en ce que le revêtement continu d'alumine est déposé, sur chaque particule d'un luminophore finement divisée pour lampe fluorescente, par dépôt de vapeur chimique, pendant que les particules se trouvent suspendues dans un lit fluidifié.

37. Procédé selon la revendication 33, caractérisé en ce que le revêtement continu d'alumine est déposé, sur chaque particule d'une poudre de luminophore finement divisée pour lampe fluorescente, par dépôt de vapeur chimique, pendant que les particules se trouvent suspendues dans un lit fluidifié; les particules fluidifiées étant exposées à un matériau précurseur vaporisé contenant de l'aluminium à une première température inférieure à la température de décomposition du matériau précurseur; et le matériau précurseur étant amené à réagir de manière à former un revêtement continu d'alumine sur la surface de chaque particule, à une seconde température supérieure ou égale à la température à partir de laquelle le matériau précurseur réagit pour former l'alumine.

38. Procédé selon la revendication 33, caractérisé en ce que le revêtement continu d'alumine est déposé sur chaque particule d'un luminophore finement divisé pour lampes fluorescentes, selon l'un quelconque des procédés décrits dans les revendications 1 à 28.

39. Lampe fluorescente caractérisée en ce qu'elle comprend une ampoule de verre dont une paroi interne est revêtue d'une ou plusieurs couches de luminophore, dont une au moins possède un composant de luminophore comprenant des particules d'un luminophore finement divisé pour lampe fluorescente, ces particules ayant été chacune revêtues d'un revêtement continu et non-cristallin d'alumine.

40. Lampe fluorescente selon la revendication 39, caractérisée en ce que le luminophore finement divisé pour lampe fluorescente est un halophosphate alcalino-terreux.

41. Lampe fluorescente selon la revendication 39, caractérisée en ce que le luminophore finement divisé pour lampe fluorescente est un luminophore d'orthosilicate de zinc dopé au manganèse.

42. Lampe fluorescente selon l'une quelconque des revendications 39 à 41, caractérisée en ce que le luminophore finement divisé pour lampe fluorescente a été revêtu par dépôt de vapeur chimique dans un lit fluidifié.

43. Lampe fluorescente caractérisée en ce qu'elle comprend une ampoule de verre comportant une paroi interne qui est enduite d'un luminophore comprenant des particules de poudre de luminophore finement divisé pour lampe fluorescente qui ont été revêtues individuellement d'un revêtement continu et non-cristallin d'alumine.

44. Lampe fluorescente selon la revendication 43, caractérisée en ce que le luminophore finement divisé pour lampe fluorescente est un halophosphate alcalino-terreux.

45. Lampe fluorescente selon la revendication 43, caractérisée en ce que le luminophore finement divisé pour lampe fluorescente est un orthosilicate de zinc dopé au manganèse.

46. Lampe fluorescente selon l'une quelconque des revendications 43 à 45, caractérisée en ce que le luminophore finement divisé pour lampe fluorescente a été revêtu par dépôt de vapeur chimique dans un lit fluidifié.

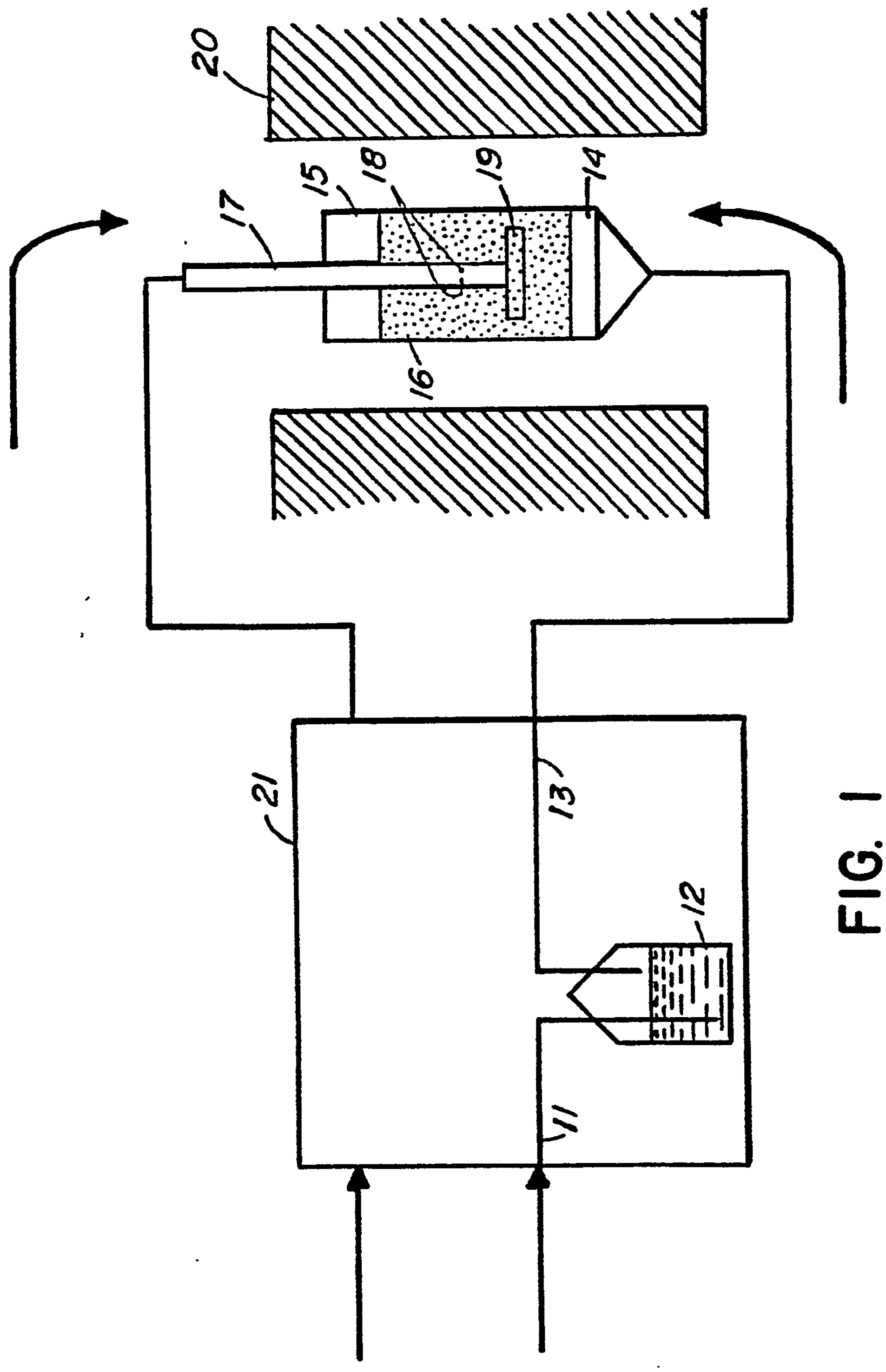


FIG. 1

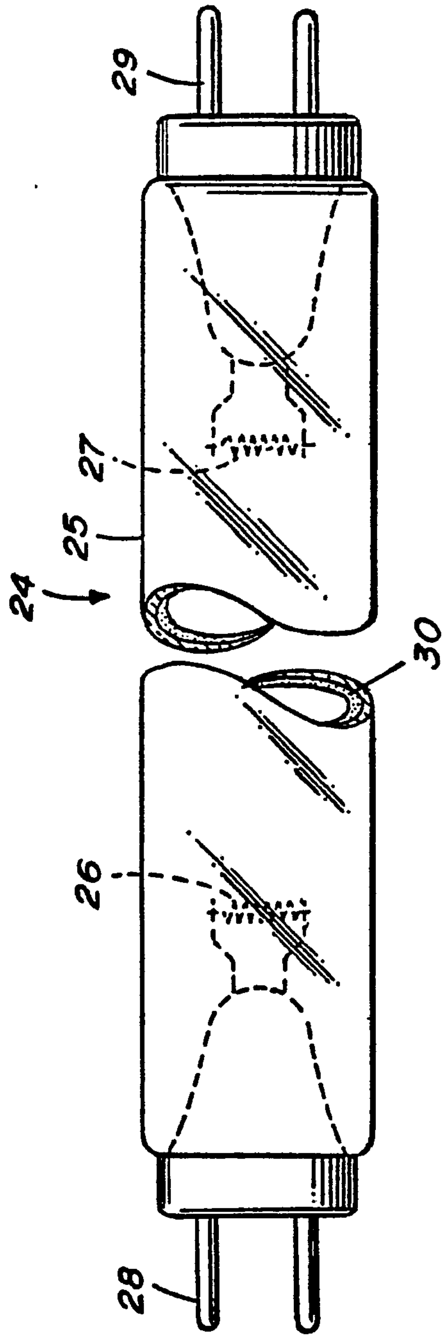


FIG. 2